# EUROPEAN PATENT APPLICATION

(11) **EP 4 412 363 A1**
(43) Date of publication of application: **07.08.2024**
(21) Application number: 22885508.6
(22) Date of filing: 20.09.2022
(51) Int. Cl.: H04W 72/04

(54) **COMMUNICATION METHOD, APPARATUS AND SYSTEM**

(30) Priority: 26.10.2021 CN 202111250629
(71) Applicant: Huawei Technologies Co., Ltd., Shenzhen, Guangdong 518129 (CN)
(72) Inventor: WANG, Ting, Shenzhen, Guangdong 518129 (CN); LYU, Yongxia, Shenzhen, Guangdong 518129 (CN); WEI, Dongdong, Shenzhen, Guangdong 518129 (CN); MA, Jianglei, Shenzhen, Guangdong 518129 (CN)
(74) Representative: Pfenning, Meinig & Partner mbB
(86) International application number: PCT/CN2022/119954
(87) International publication number: WO 2023/071621

(57) **Abstract**

Embodiments of this application provide a communication method, apparatus, and system, and relate to the field of communication technologies, to reduce a communication latency of the communication system, reduce device power consumption, and improve resource utilization flexibility. The method includes: A first communication apparatus receives first control information from a network device, and sends data based on the first control information, where the first control information indicates the first communication apparatus to send the data, the first control information includes identification information of one or more communication groups and first indication information of the communication group, the communication group includes the first communication apparatus and a second communication apparatus, the identification information of the communication group is used to determine the first communication apparatus and the second communication apparatus, and the first indication information of the communication group indicates a time-frequency resource for communication of the communication group.

## Description

This application claims priority to Chinese Patent Application No. 202111250629.8, filed with the China National Intellectual Property Administration on October 26, 2021 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In existing communication systems, a communication scenario of ultra-reliable low-latency communication (ultra-reliability low latency communication, URLLC) for industrial manufacturing is a typical communication scenario of a 5th generation mobile communication technology (5th generation mobile communication technology, 5G) system different from a previous communication system. In a factory communication scenario, a two-layer structure may be used for deployment. For example, an access network device, a transmitter device (for example, a controller), and a receiver device (for example, a bottom device or an executor) may be included. The transmitter device may communicate with the receiver device through the access network device.

For example, the transmitter device may communicate with the receiver device through the access network device. The access network device may send downlink control information (downlink control information, DCI) to the transmitter device, the transmitter device may send sidelink control information (sidelink control information, SCI) and data based on the DCI, and the receiver device blindly detects and receives the SCI and the data. However, a communication latency of this method is large. In addition, the receiver device may need to blindly detect both the DCI sent by the access network device and the SCI sent by the transmitter device. Consequently, blind detection complexity of the receiver device is high, and energy consumption is high.

Alternatively, the transmitter device may communicate with the receiver device in an autonomous selection mode. The access network device may semi-statically configure, by using radio resource control (radio resource control, RRC) signaling, resources available to the transmitter device. The transmitter device may determine specific available resources through sensing, and further send the SCI and the data on the available resources. The receiver device blindly detects and receives the SCI and the data. However, because the access network device does not determine specific devices that need to perform data transmission, the access network device reserves a resource for each device. Consequently, resource utilization is inflexible.

Alternatively, the transmitter control device may communicate with the receiver device based on a sidelink slot indicated by the access network device. However, the access network device semi-statically configures a sidelink slot in a time division manner, and the transmitter device cannot flexibly invoke a resource based on a service status. Consequently, resource utilization is inflexible.

In conclusion, for an industrial manufacturing communication scenario or future communication, how to design a communication method to reduce a communication latency and device power consumption and improve resource utilization flexibility becomes a problem to be urgently resolved.

### SUMMARY

In view of this, this application provides a communication method, apparatus, and system, to reduce a communication latency of the communication system, reduce device power consumption, and improve resource utilization flexibility.

According to a first aspect, an embodiment of this application provides a communication method. The method includes: A first communication apparatus receives first control information from a network device, and sends data based on the first control information, where the first control information indicates the first communication apparatus to send the data, the first control information includes identification information of one or more communication groups and first indication information of the communication group, the communication group includes the first communication apparatus and a second communication apparatus, the identification information of the communication group is used to determine the first communication apparatus and the second communication apparatus, and the first indication information of the communication group indicates a time-frequency resource for communication of the communication group.

Based on the first aspect, the first communication apparatus in the communication group may determine, based on the first control information sent by the network device, that the data needs to be sent, determine the time-frequency resource based on the first indication information in the first control information, and send the data based on the time-frequency resource. This can reduce a communication latency of a communication system and reduce device power consumption. In addition, in this embodiment of this application, the network device configures a time-frequency resource for each communication group by using the first control information, so that signaling overheads of control information can be reduced, and flexible resource allocation can be implemented, to improve communication performance.

Based on the first aspect, the network device indicates the identification information of the communication group, so that the first communication apparatus and the second communication apparatus can be flexibly indicated, various communication links can be centrally scheduled, and time-frequency resources are dynamically shared, to improve resource utilization and flexibility. In addition, joint switching of the communication links can be implemented, a communication latency can be reduced, and communication performance can be improved.

In a possible design, the first control information further indicates the second communication apparatus to receive data.

Based on this possible design, the first control information may further indicate the second communication apparatus to receive the data. The network device may send the first control information to the second communication apparatus, to indicate the second communication apparatus to receive the data. The first communication apparatus and the second communication apparatus may receive the same first control information. This can reduce blind detection complexity and reduce signaling overheads.

In a possible design, the identification information includes at least one of the following: a unicast device identifier, a multicast group device identifier, and a broadcast device identifier.

Based on this possible design, unified scheduling and unified communication of unicast, multicast, and broadcast links can be implemented, and flexible resource allocation can be implemented, to improve communication performance.

In a possible design, the first communication apparatus receives first configuration information from the network device; and the first communication apparatus descrambles the first control information based on the first configuration information. The first configuration information includes a group radio network temporary identifier RNTI; the first configuration information includes a group sending RNTI; the first configuration information includes a first sending RNTI; or the first configuration information includes a first sending RNTI and a first receiving RNTI.

Based on this possible design, complexity of blind detection performed by the first communication apparatus on the first control information can be reduced, and the communication latency can be reduced.

In a possible design, the first control information includes information blocks of the plurality of communication groups, and the information block of the communication group includes the identification information of the communication group and the first indication information of the communication group.

Based on this possible design, the first control information may be used to schedule communication of a plurality of communication pairs, to reduce control signaling overheads.

In a possible design, the first communication apparatus receives second indication information from the network device, where the second indication information indicates a location of one or more information blocks corresponding to the first communication apparatus in the first control information.

Based on this possible design, the first communication apparatus may decode partial information blocks based on the second indication information, so that decoding complexity of the first communication apparatus can be reduced.

In a possible design, the first control information further includes third indication information, and the third indication information indicates whether the first control information includes the information block corresponding to the first communication apparatus.

Based on this possible design, when the third indication information indicates that the first communication apparatus does not participate in communication, the first communication apparatus may not decode information about a subsequent information block, so that decoding complexity of the communication apparatus can be reduced. In addition, a communication apparatus scheduled by using each information block may be dynamically determined, to improve scheduling flexibility.

In a possible design, the first control information includes identification information of the plurality of communication groups and information blocks of the plurality of communication groups. The information block of the communication group includes the first indication information of the communication group, and a location of the information block of the communication group in the information blocks of the plurality of communication groups is determined based on a location of the identification information of the communication group in the identification information of the plurality of communication groups.

Based on this possible design, the first communication apparatus may determine, based on the identification information of the communication group in the control information, whether the subsequent information block needs to be decoded. If the subsequent information block needs to be decoded, the first communication apparatus may determine a location of the information block of the communication group of the first communication apparatus in the information blocks of the plurality of communication groups based on the location of the identification information of the communication group in the identification information of the plurality of communication groups, to reduce decoding complexity of the first communication apparatus, accelerate decoding, and reduce a latency.

In a possible design, the first control information includes a first list, a second list, and information blocks of the plurality of communication groups. The first list includes identification information of a first communication apparatus in the communication group, the second list includes identification information of a second communication apparatus in the communication group, and the information block of the communication group includes the first indication information of the communication group.

Based on this possible design, the first communication apparatus may determine, based on the first list, whether the subsequent information block needs to be decoded. If the subsequent information block needs to be decoded, the first communication apparatus may determine a location of the information block of the communication group of the first communication apparatus in the information blocks of the plurality of communication groups based on a location of the identification information of the first communication apparatus in the first list, to reduce decoding complexity of the first communication apparatus, accelerate decoding, and reduce a latency.

In a possible design, the first control information includes one or more information blocks, and the information block includes a third list, a fourth list, and first indication information. The third list includes identification information of one or more first communication apparatuses, the fourth list includes identification information of one or more second communication apparatuses, and the first indication information indicates a time-frequency resource for communication between the first communication apparatus in the third list and the second communication apparatus in the fourth list.

Based on this possible design, this embodiment of this application is further applicable to a multi-user MU scenario, to further reduce control information overheads and reduce blind detection on control information.

In a possible design, the first control information further includes one or more of the following: sixth indication information of the communication group, seventh indication information of the communication group, eighth indication information of the communication group, ninth indication information of the communication group, and tenth indication information of the communication group, where the sixth indication information of the communication group indicates a modulation and coding scheme MCS used by the communication group to perform communication, the seventh indication information of the communication group indicates a transport block size TBS used by the communication group to perform communication, the eighth indication information of the communication group indicates a beam pair used by the communication group to perform communication, the ninth indication information of the communication group indicates a DMRS sequence used by the communication group to perform communication, and the tenth indication information of the communication group indicates an antenna port number used by the communication group to perform communication.

Based on this possible design, the first control information may further include one or more of the foregoing information, to provide a feasible solution for designing the first control information.

In a possible design, the first communication apparatus sends eleventh indication information to the network device, where the eleventh indication information indicates a beam/beam pair used by the first communication apparatus to send data.

Based on this possible design, the network device may perform global coordination based on the beam information reported by the first communication apparatus, to avoid interference and improve space division multiplexing performance.

According to a second aspect, an embodiment of this application provides a first communication apparatus. The first communication apparatus may implement functions performed by the first communication apparatus in the first aspect or the possible designs of the first aspect. The functions may be implemented by hardware by executing corresponding software. The hardware or the software includes one or more modules corresponding to the functions, for example, a transceiver unit and a processing unit. The processing unit is configured to confirm first control information. The transceiver unit is configured to receive the first control information from a network device, and send data based on the first control information, where the first control information indicates the first communication apparatus to send the data, the first control information includes identification information of one or more communication groups and first indication information of the communication group, the communication group includes the first communication apparatus and a second communication apparatus, the identification information of the communication group is used to determine the first communication apparatus and the second communication apparatus, and the first indication information of the communication group indicates a time-frequency resource for communication of the communication group.

In a possible design, the first control information further indicates the second communication apparatus to receive data.

In a possible design, the identification information includes at least one of the following: a unicast device identifier, a multicast group device identifier, and a broadcast device identifier.

In a possible design, the transceiver unit is further configured to receive first configuration information from the network device. The processing unit is configured to descramble the first control information based on the first configuration information, where the first configuration information includes a group radio network temporary identifier RNTI; the first configuration information includes a group sending RNTI; the first configuration information includes a first sending RNTI; or the first configuration information includes a first sending RNTI and a first receiving RNTI.

In a possible design, the first control information includes information blocks of the plurality of communication groups, and the information block of the communication group includes the identification information of the communication group and the first indication information of the communication group.

In a possible design, the transceiver unit is further configured to receive second indication information from the network device, where the second indication information indicates a location of the one or more information blocks corresponding to the first communication apparatus in the first control information.

In a possible design, the first control information further includes third indication information, and the third indication information indicates whether the first control information includes the information block corresponding to the first communication apparatus.

In a possible design, the first control information includes identification information of the plurality of communication groups and information blocks of the plurality of communication groups. The information block of the communication group includes the first indication information of the communication group, and a location of the information block of the communication group in the information blocks of the plurality of communication groups is determined based on a location of the identification information of the communication group in the identification information of the plurality of communication groups.

In a possible design, the first control information includes a first list, a second list, and information blocks of the plurality of communication groups. The first list includes identification information of a first communication apparatus in the communication group, the second list includes identification information of a second communication apparatus in the communication group, and the information block of the communication group includes the first indication information of the communication group.

In a possible design, the first control information includes one or more information blocks, and the information block includes a third list, a fourth list, and first indication information. The third list includes identification information of one or more first communication apparatuses, the fourth list includes identification information of one or more second communication apparatuses, and the first indication information indicates a time-frequency resource for communication between the first communication apparatus in the third list and the second communication apparatus in the fourth list.

In a possible design, the first control information further includes one or more of the following: sixth indication information of the communication group, seventh indication information of the communication group, eighth indication information of the communication group, ninth indication information of the communication group, and tenth indication information of the communication group, where the sixth indication information of the communication group indicates a modulation and coding scheme MCS used by the communication group to perform communication, the seventh indication information of the communication group indicates a transport block size TBS used by the communication group to perform communication, the eighth indication information of the communication group indicates a beam pair used by the communication group to perform communication, the ninth indication information of the communication group indicates a DMRS sequence used by the communication group to perform communication, and the tenth indication information of the communication group indicates an antenna port number used by the communication group to perform communication.

In a possible design, the transceiver unit is further configured to send eleventh indication information to the network device, where the eleventh indication information indicates a beam/beam pair used by the first communication apparatus to send data.

It should be noted that, for a specific implementation of the first communication apparatus in the second aspect, refer to behavior functions of the first communication apparatus in the communication method provided in any one of the first aspect or the possible designs of the first aspect.

According to a third aspect, an embodiment of this application provides a first communication apparatus. The first communication apparatus may be the first communication apparatus, or a chip or a system on chip in the first communication apparatus. The first communication apparatus may implement functions performed by the first communication apparatus in the foregoing aspects or possible designs, and the functions may be implemented by hardware. In a possible design, the first communication apparatus may include a transceiver and a processor. The transceiver and the processor may be configured to support the first communication apparatus in implementing the functions in any one of the first aspect or the possible designs of the first aspect. For example, the transceiver may be configured to receive first control information from a network device, and send data based on the first control information, where the first control information indicates the first communication apparatus to send the data, the first control information includes identification information of one or more communication groups and first indication information of the communication group, the communication group includes the first communication apparatus and a second communication apparatus, the identification information of the communication group is used to determine the first communication apparatus and the second communication apparatus, and the first indication information of the communication group indicates a time-frequency resource for communication of the communication group. In another possible design, the first communication apparatus may further include a memory. The memory is configured to store computer-executable instructions and data that are necessary for the first communication apparatus. When the first communication apparatus runs, the transceiver and the processor execute the computer-executable instructions stored in the memory, so that the first communication apparatus performs the communication method in any one of the first aspect or the possible designs of the first aspect.

For a specific implementation of the first communication apparatus in the third aspect, refer to behavior functions of the first communication apparatus in the communication method provided in any one of the first aspect or the possible designs of the first aspect.

According to a fourth aspect, an embodiment of this application provides a communication method. The method includes: A second communication apparatus receives second control information from a network device, and receives data based on the second control information, where the second control information indicates the second communication apparatus to receive the data, the second control information includes identification information of one or more communication groups and first indication information of the communication group, the communication group includes a first communication apparatus and the second communication apparatus, the identification information of the communication group is used to determine the first communication apparatus and the second communication apparatus, and the first indication information of the communication group indicates a time-frequency resource for communication of the communication group.

Based on the fourth aspect, the second communication apparatus in the communication group may determine, based on the second control information sent by the network device, that the data needs to be received, determine the time-frequency resource based on the first indication information in the second control information, and receive the data based on the time-frequency resource. This can reduce a communication latency of a communication system and reduce device power consumption. In addition, in this embodiment of this application, the network device configures a time-frequency resource for each communication group by using the second control information, so that signaling overheads of control information can be reduced, and flexible resource allocation can be implemented, to improve communication performance.

Based on the fourth aspect, the network device indicates the identification information of the communication group, so that the first communication apparatus and the second communication apparatus can be flexibly indicated, various communication links can be centrally scheduled, and time-frequency resources are dynamically shared, to improve resource utilization and flexibility. In addition, joint switching of the communication links can be implemented, a communication latency can be reduced, and communication performance can be improved.

In a possible design, the second control information further indicates the first communication apparatus to send the data.

Based on this possible design, the second control information may further indicate the first communication apparatus to send the data. The network device may send the second control information to the first communication apparatus, to indicate the first communication apparatus to send the data. The first communication apparatus and the second communication apparatus may receive the same second control information. This can reduce blind detection complexity and reduce signaling overheads.

In a possible design, the identification information includes at least one of the following: a unicast device identifier, a multicast group device identifier, and a broadcast device identifier.

Based on this possible design, unified scheduling and unified communication of unicast, multicast, and broadcast links can be implemented, and flexible resource allocation can be implemented, to improve communication performance.

In a possible design, the second communication apparatus receives second configuration information from the network device, and the second communication apparatus descrambles the second control information based on the second configuration information. The second configuration information includes a group radio network temporary identifier RNTI; the second configuration information includes a group receiving RNTI; the second configuration information includes a second receiving RNTI; or the second configuration information includes a second sending RNTI and a second receiving RNTI.

Based on this possible design, complexity of blind detection performed by the second communication apparatus on the second control information can be reduced, and the communication latency can be reduced.

In a possible design, the second control information includes information blocks of the plurality of communication groups, and the information block of the communication group includes the identification information of the communication group and the first indication information of the communication group.

Based on this possible design, the second control information may be used to schedule communication of a plurality of communication pairs, to reduce control signaling overheads.

In a possible design, the second communication apparatus receives fourth indication information from the network device, where the fourth indication information indicates a location of one or more information blocks corresponding to the second communication apparatus in the second control information.

Based on this possible design, the second communication apparatus may decode partial information blocks based on the fourth indication information, so that decoding complexity of the second communication apparatus can be reduced.

In a possible design, the second control information further includes fifth indication information, and the fifth indication information indicates whether the second control information includes the information block corresponding to the second communication apparatus.

Based on this possible design, when the fifth indication information indicates that the second communication apparatus does not participate in communication, the second communication apparatus may not decode information about a subsequent information block, so that decoding complexity of the communication apparatus can be reduced. In addition, a communication apparatus scheduled by using each information block may be dynamically determined, to improve scheduling flexibility.

In a possible design, the second control information includes identification information of the plurality of communication groups and information blocks of the plurality of communication groups. The information block of the communication group includes the first indication information of the communication group, and a location of the information block of the communication group in the information blocks of the plurality of communication groups is determined based on a location of the identification information of the communication group in the identification information of the plurality of communication groups.

Based on this possible design, the second communication apparatus may determine, based on the identification information of the communication group in the control information, whether the subsequent information block needs to be decoded. If the subsequent information block needs to be decoded, the second communication apparatus may determine a location of the information block of the communication group of the second communication apparatus in the information blocks of the plurality of communication groups based on the location of the identification information of the communication group in the identification information of the plurality of communication groups, to reduce decoding complexity of the second communication apparatus, accelerate decoding, and reduce a latency.

In a possible design, the second control information includes a first list, a second list, and information blocks of the plurality of communication groups. The first list includes identification information of a first communication apparatus in the communication group, the second list includes identification information of a second communication apparatus in the communication group, and the information block of the communication group includes the first indication information of the communication group.

Based on this possible design, the second communication apparatus may determine, based on the second list, whether the subsequent information block needs to be decoded. If the subsequent information block needs to be decoded, the second communication apparatus may determine a location of the information block of the communication group of the second communication apparatus in the information blocks of the plurality of communication groups based on a location of the identification information of the second communication apparatus in the second list, to reduce decoding complexity of the second communication apparatus, accelerate decoding, and reduce a latency.

In a possible design, the second control information includes one or more information blocks, and the information block includes a third list, a fourth list, and first indication information. The third list includes identification information of one or more first communication apparatuses, the fourth list includes identification information of one or more second communication apparatuses, and the first indication information indicates a time-frequency resource for communication between the first communication apparatus in the third list and the second communication apparatus in the fourth list.

Based on this possible design, this embodiment of this application is further applicable to a multi-user MU scenario, to further reduce control information overheads and reduce blind detection on control information.

In a possible design, the second control information includes one or more of the following: sixth indication information of the communication group, seventh indication information of the communication group, eighth indication information of the communication group, ninth indication information of the communication group, and tenth indication information of the communication group, where the sixth indication information of the communication group indicates a modulation and coding scheme MCS used by the communication group to perform communication, the seventh indication information of the communication group indicates a transport block size TBS used by the communication group to perform communication, the eighth indication information of the communication group indicates a beam pair used by the communication group to perform communication, the ninth indication information of the communication group indicates a DMRS sequence used by the communication group to perform communication, and the tenth indication information of the communication group indicates an antenna port number used by the communication group to perform communication.

Based on this possible design, the first control information may further include one or more of the foregoing information, to provide a feasible solution for designing the first control information.

In a possible design, the second communication apparatus sends twelfth indication information to the network device, where the twelfth indication information indicates a beam/beam pair used by the second communication apparatus to receive data.

Based on this possible design, the network device may perform global coordination based on the beam information reported by the second communication apparatus, to avoid interference and improve space division multiplexing performance.

According to a fifth aspect, an embodiment of this application provides a second communication apparatus. The second communication apparatus may implement functions performed by the second communication apparatus in the fourth aspect or the possible designs of the fourth aspect. The functions may be implemented by hardware by executing corresponding software. The hardware or the software includes one or more modules corresponding to the functions, for example, a transceiver unit and a processing unit. The processing unit is configured to confirm second control information. The transceiver unit is configured to receive the second control information from a network device, and receive data based on the second control information, where the second control information indicates the second communication apparatus to receive the data, the second control information includes identification information of one or more communication groups and first indication information of the communication group, the communication group includes a first communication apparatus and the second communication apparatus, the identification information of the communication group is used to determine the first communication apparatus and the second communication apparatus, and the first indication information of the communication group indicates a time-frequency resource for communication of the communication group.

In a possible design, the second control information further indicates the first communication apparatus to send data.

In a possible design, the identification information includes at least one of the following: a unicast device identifier, a multicast group device identifier, and a broadcast device identifier.

In a possible design, the transceiver unit is further configured to receive second configuration information from the network device; and the processing unit is configured to descramble the second control information based on the second configuration information, where the second configuration information includes a group radio network temporary identifier RNTI; the second configuration information includes a group receiving RNTI; the second configuration information includes a second receiving RNTI; or the second configuration information includes a second sending RNTI and a second receiving RNTI.

In a possible design, the second control information includes information blocks of the plurality of communication groups, and the information block of the communication group includes the identification information of the communication group and the first indication information of the communication group.

In a possible design, the transceiver unit is further configured to receive fourth indication information from the network device, where the fourth indication information indicates a location of one or more information blocks corresponding to the second communication apparatus in the second control information.

In a possible design, the second control information further includes fifth indication information, and the fifth indication information indicates whether the second control information includes the information block corresponding to the second communication apparatus.

In a possible design, the second control information includes identification information of the plurality of communication groups and information blocks of the plurality of communication groups. The information block of the communication group includes the first indication information of the communication group, and a location of the information block of the communication group in the information blocks of the plurality of communication groups is determined based on a location of the identification information of the communication group in the identification information of the plurality of communication groups.

In a possible design, the second control information includes a first list, a second list, and information blocks of the plurality of communication groups. The first list includes identification information of a first communication apparatus in the communication group, the second list includes identification information of a second communication apparatus in the communication group, and the information block of the communication group includes the first indication information of the communication group.

In a possible design, the second control information includes one or more information blocks, and the information block includes a third list, a fourth list, and first indication information. The third list includes identification information of one or more first communication apparatuses, the fourth list includes identification information of one or more second communication apparatuses, and the first indication information indicates a time-frequency resource for communication between the first communication apparatus in the third list and the second communication apparatus in the fourth list.

In a possible design, the second control information includes one or more of the following: sixth indication information of the communication group, seventh indication information of the communication group, eighth indication information of the communication group, ninth indication information of the communication group, and tenth indication information of the communication group, where the sixth indication information of the communication group indicates a modulation and coding scheme MCS used by the communication group to perform communication, the seventh indication information of the communication group indicates a transport block size TBS used by the communication group to perform communication, the eighth indication information of the communication group indicates a beam pair used by the communication group to perform communication, the ninth indication information of the communication group indicates a DMRS sequence used by the communication group to perform communication, and the tenth indication information of the communication group indicates an antenna port number used by the communication group to perform communication.

In a possible design, the transceiver unit is further configured to send twelfth indication information to the network device, where the twelfth indication information indicates a beam/beam pair used by the second communication apparatus to receive data.

It should be noted that, for a specific implementation of the second communication apparatus in the fifth aspect, refer to behavior functions of the second communication apparatus in the communication method provided in any one of the fourth aspect or the possible designs of the fourth aspect.

According to a sixth aspect, an embodiment of this application provides a second communication apparatus. The second communication apparatus may be the second communication apparatus, or a chip or a system on chip in the second communication apparatus. The second communication apparatus may implement functions performed by the second communication apparatus in the foregoing aspects or possible designs, and the functions may be implemented by hardware. In a possible design, the second communication apparatus may include a transceiver and a processor. The transceiver and the processor may be configured to support the second communication apparatus in implementing the functions in any one of the fourth aspect or the possible designs of the fourth aspect. For example, the transceiver may be configured to receive second control information from a network device, and receive data based on the second control information, where the second control information indicates the second communication apparatus to receive data, the second control information includes identification information of one or more communication groups and first indication information of the communication group, the communication group includes a first communication apparatus and the second communication apparatus, the identification information of the communication group is used to determine the first communication apparatus and the second communication apparatus, and the first indication information of the communication group indicates a time-frequency resource for communication of the communication group. In another possible design, the second communication apparatus may further include a memory. The memory is configured to store computer-executable instructions and data that are necessary for the second communication apparatus. When the second communication apparatus runs, the transceiver and the processor execute the computer-executable instructions stored in the memory, so that the second communication apparatus performs the communication method in any one of the fourth aspect or the possible designs of the fourth aspect.

For a specific implementation of the second communication apparatus in the sixth aspect, refer to behavior functions of the second communication apparatus provided in the communication method provided in any one of the fourth aspect or the possible designs of the fourth aspect.

According to a seventh aspect, an embodiment of this application provides a communication method. The method includes: A network device sends first control information to a first communication apparatus, where the first control information indicates the first communication apparatus to send data, the first control information includes identification information of one or more communication groups and first indication information of the communication group, the communication group includes the first communication apparatus and a second communication apparatus, the identification information of the communication group is used to determine the first communication apparatus and the second communication apparatus, and the first indication information of the communication group indicates a time-frequency resource for communication of the communication group. The network device sends second control information to the second communication apparatus, where the second control information indicates the second communication apparatus to receive data, and the second control information includes the identification information of the one or more communication groups and the first indication information of the communication group.

Based on the seventh aspect, the network device may send the first control information and the second control information to the first communication apparatus and the second communication group respectively, so that the first communication apparatus and the second communication apparatus in the communication group can communicate based on the time-frequency resource indicated by the network device, to reduce a communication latency of a communication system and reduce device power consumption. In addition, in this embodiment of this application, the network device configures a time-frequency resource for each communication group by using the control information, so that signaling overheads of control information can be reduced, and flexible resource allocation can be implemented, to improve communication performance.

Based on the seventh aspect, the network device indicates the identification information of the communication group, so that the first communication apparatus and the second communication apparatus can be flexibly indicated, various communication links can be centrally scheduled, and time-frequency resources are dynamically shared, to improve resource utilization and flexibility. In addition, joint switching of the communication links can be implemented, a communication latency can be reduced, and communication performance can be improved.

In a possible design, the first control information is the same as the second control information.

Based on this possible design, the first communication apparatus and the second communication apparatus may receive same control information. This can reduce blind detection complexity and reduce signaling overheads.

In a possible design, the identification information includes at least one of the following: a unicast device identifier, a multicast group device identifier, and a broadcast device identifier.

Based on this possible design, unified scheduling and unified communication of unicast, multicast, and broadcast links can be implemented, and flexible resource allocation can be implemented, to improve communication performance.

In a possible design, the network device scrambles the first control information based on first configuration information; and/or the network device scrambles the second control information based on second configuration information, where the first configuration information includes a group radio network temporary identifier RNTI; the first configuration information includes a group sending RNTI; the first configuration information includes a first sending RNTI; or the first configuration information includes a first sending RNTI and a first receiving RNTI; and the second configuration information includes a group RNTI; the second configuration information includes a group receiving RNTI; the second configuration information includes a second receiving RNTI; or the second configuration information includes a second sending RNTI and a second receiving RNTI.

In a possible design, the network device sends the first configuration information to the first communication apparatus; and/or the network device sends the second configuration information to the second communication apparatus.

Based on the foregoing two possible designs, complexity of blind detection performed by the first communication apparatus on the first control information can be reduced, and a communication latency can be reduced.

In a possible design, the network device sends the first control information to the first communication apparatus through a first beam, and the network device sends the second control information to the second communication apparatus through the first beam; or the network device sends the first control information to the first communication apparatus through a first beam, and the network device sends the second control information to the second communication apparatus through a second beam.

Based on this possible design, when the first communication apparatus in the communication group is close to the second communication apparatus, the network device may send the first control information and the second control information through a same beam with a same power, to implement fast scheduling and reduce control information overheads. In addition, the first communication apparatus and the second communication apparatus may simultaneously receive the control information, quickly determine the time-frequency resource indicated by the network device, and perform channel estimation, to reduce a latency. When the first communication apparatus in the communication group is far away from the second communication apparatus, and a power/beam difference is large, the network device may send the control information through different powers and/or different beams. For example, the network device sends the first control information to the first communication apparatus through the first beam, and sends the second control information to the second communication apparatus through the second beam, to implement fast scheduling and reduce control information overheads. The first communication apparatus and the second communication apparatus may respectively receive the first control information and the second control information, quickly determine the time-frequency resource indicated by the network device, and perform channel estimation, to reduce a latency.

In a possible design, the first control information includes information blocks of the plurality of communication groups, and the information block of the communication group includes the identification information of the communication group and the first indication information of the communication group; and/or the second control information includes information blocks of the plurality of communication groups, and the information block of the communication group includes the identification information of the communication group and the first indication information of the communication group.

Based on this possible design, the control information may be used to schedule communication of a plurality of communication pairs, to reduce control signaling overheads.

In a possible design, the network device sends second indication information to the first communication apparatus, where the second indication information indicates a location of one or more information blocks corresponding to the first communication apparatus in the first control information; and/or the network device sends fourth indication information to the second communication apparatus, where the fourth indication information indicates a location of one or more information blocks corresponding to the second communication apparatus in the second control information.

Based on this possible design, the first communication apparatus may decode partial information blocks based on the second indication information, and the second communication apparatus may decode partial information blocks based on the fourth indication information. This can reduce decoding complexity of the first communication apparatus.

In a possible design, the first control information further includes third indication information, and the third indication information indicates whether the first control information includes the information block corresponding to the first communication apparatus; and/or the second control information further includes fifth indication information, and the fifth indication information indicates whether the second control information includes the information block corresponding to the second communication apparatus.

Based on this possible design, when the third indication information indicates that the first communication apparatus does not participate in communication, the first communication apparatus may not decode information about a subsequent information block. When the fifth indication information indicates that the second communication apparatus does not participate in communication, the second communication apparatus may not decode information about a subsequent information block, so that decoding complexity of the communication apparatus can be reduced. In addition, a communication apparatus scheduled by using each information block may be dynamically determined, to improve scheduling flexibility.

In a possible design, the first control information includes identification information of the plurality of communication groups and information blocks of the plurality of communication groups; and/or the second control information includes identification information of the plurality of communication groups and information blocks of the plurality of communication groups. The information block of the communication group includes the first indication information of the communication group, and a location of the information block of the communication group in the information blocks of the plurality of communication groups is determined based on a location of the identification information of the communication group in the identification information of the plurality of communication groups.

Based on this possible design, the first communication apparatus and the second communication apparatus may determine, based on the identification information of the communication group in the control information, whether the subsequent information block needs to be decoded. If the subsequent information block needs to be decoded, the first communication apparatus and the second communication apparatus may determine locations of the information blocks of the communication group of the first communication apparatus and the second communication apparatus in the information blocks of the plurality of communication groups based on the location of the identification information of the communication group in the identification information of the plurality of communication groups, to reduce decoding complexity of the first communication apparatus and the second communication apparatus, accelerate decoding, and reduce a latency.

In a possible design, the first control information includes a first list, a second list, and information blocks of the plurality of communication groups; and/or the second control information includes a first list, a second list, and information blocks of the plurality of communication groups. The first list includes identification information of a first communication apparatus in the communication group, the second list includes identification information of a second communication apparatus in the communication group, and the information block of the communication group includes the first indication information of the communication group.

Based on this possible design, the first communication apparatus may determine, based on the first list, whether the subsequent information block needs to be decoded. If the subsequent information block needs to be decoded, the first communication apparatus may determine a location of the information block of the communication group of the first communication apparatus in the information blocks of the plurality of communication groups based on a location of the identification information of the first communication apparatus in the first list. The second communication apparatus may determine, based on the second list, whether the subsequent information block needs to be decoded. If the subsequent information block needs to be decoded, the second communication apparatus may determine a location of the information block of the communication group of the second communication apparatus in the information blocks of the plurality of communication groups based on a location of the identification information of the second communication apparatus in the second list, to reduce decoding complexity of the communication apparatus, accelerate decoding, and reduce a latency.

In a possible design, the first control information includes one or more information blocks, and the information block includes a third list, a fourth list, and first indication information; and/or the second control information includes one or more information blocks, and the information block includes a third list, a fourth list, and first indication information. The third list includes identification information of one or more first communication apparatuses, the fourth list includes identification information of one or more second communication apparatuses, and the first indication information indicates a time-frequency resource for communication between the first communication apparatus in the third list and the second communication apparatus in the fourth list.

Based on this possible design, this embodiment of this application is further applicable to a multi-user MU scenario, to further reduce control information overheads and reduce blind detection on control information.

In a possible design, the first control information further includes one or more of the following: sixth indication information of the communication group, seventh indication information of the communication group, eighth indication information of the communication group, ninth indication information of the communication group, and tenth indication information of the communication group; and/or the second control information includes one or more of the following: sixth indication information of the communication group, seventh indication information of the communication group, eighth indication information of the communication group, ninth indication information of the communication group, and tenth indication information of the communication group, where the sixth indication information of the communication group indicates a modulation and coding scheme MCS used by the communication group to perform communication, the seventh indication information of the communication group indicates a transport block size TBS used by the communication group to perform communication, the eighth indication information of the communication group indicates a beam pair used by the communication group to perform communication, the ninth indication information of the communication group indicates a DMRS sequence used by the communication group to perform communication, and the tenth indication information of the communication group indicates an antenna port number used by the communication group to perform communication.

In a possible design, the network device receives eleventh indication information from the first communication apparatus, where the eleventh indication information indicates a beam/beam pair used by the first communication apparatus to send data; and/or the network device receives twelfth indication information from the second communication apparatus, where the twelfth indication information indicates a beam/beam pair used by the second communication apparatus to receive data.

Based on this possible design, the network device may perform global coordination based on the beam information reported by the communication apparatus, to avoid interference and improve space division multiplexing performance.

According to an eighth aspect, an embodiment of this application provides a network device. The network device may implement functions performed by the network device in the seventh aspect or the possible designs of the seventh aspect, and the functions may be implemented by hardware by executing corresponding software. The hardware or the software includes one or more modules corresponding to the functions, for example, a transceiver unit and a processing unit. The processing unit is configured to determine first control information, and is further configured to determine second control information. The transceiver unit is configured to send the first control information to a first communication apparatus, and is further configured to send the second control information to a second communication apparatus, where the first control information indicates the first communication apparatus to send data, the first control information includes identification information of one or more communication groups and first indication information of the communication group, the communication group includes the first communication apparatus and the second communication apparatus, the identification information of the communication group is used to determine the first communication apparatus and the second communication apparatus, the first indication information of the communication group indicates a time-frequency resource for communication of the communication group, the second control information indicates the second communication apparatus to receive data, and the second control information includes the identification information of the one or more communication groups and the first indication information of the communication group.

In a possible design, the first control information is the same as the second control information.

In a possible design, the identification information includes at least one of the following: a unicast device identifier, a multicast group device identifier, and a broadcast device identifier.

In a possible design, the processing unit is configured to scramble the first control information based on first configuration information; and/or configured to scramble the second control information based on second configuration information, where the first configuration information includes a group radio network temporary identifier RNTI; the first configuration information includes a group sending RNTI; the first configuration information includes a first sending RNTI; or the first configuration information includes a first sending RNTI and a first receiving RNTI; and the second configuration information includes a group RNTI; the second configuration information includes a group receiving RNTI; the second configuration information includes a second receiving RNTI; or the second configuration information includes a second sending RNTI and a second receiving RNTI.

In a possible design, the transceiver unit is further configured to send the first configuration information to the first communication apparatus, and/or is further configured to send the second configuration information to the second communication apparatus.

In a possible design, the transceiver unit is further configured to send the first control information to the first communication apparatus through a first beam, and send the second control information to the second communication apparatus through the first beam; or the transceiver unit is further configured to send the first control information to the first communication apparatus through a first beam, and send the second control information to the second communication apparatus through a second beam.

In a possible design, the first control information includes information blocks of the plurality of communication groups, and the information block of the communication group includes the identification information of the communication group and the first indication information of the communication group; and/or the second control information includes information blocks of the plurality of communication groups, and the information block of the communication group includes the identification information of the communication group and the first indication information of the communication group.

In a possible design, the transceiver unit is further configured to send second indication information to the first communication apparatus, where the second indication information indicates a location of one or more information blocks corresponding to the first communication apparatus in the first control information; and/or the transceiver unit is further configured to send fourth indication information to the second communication apparatus, where the fourth indication information indicates a location of one or more information blocks corresponding to the second communication apparatus in the second control information.

In a possible design, the first control information further includes third indication information, and the third indication information indicates whether the first control information includes the information block corresponding to the first communication apparatus; and/or the second control information further includes fifth indication information, and the fifth indication information indicates whether the second control information includes the information block corresponding to the second communication apparatus.

In a possible design, the first control information includes identification information of the plurality of communication groups and information blocks of the plurality of communication groups; and/or the second control information includes identification information of the plurality of communication groups and information blocks of the plurality of communication groups. The information block of the communication group includes the first indication information of the communication group, and a location of the information block of the communication group in the information blocks of the plurality of communication groups is determined based on a location of the identification information of the communication group in the identification information of the plurality of communication groups.

In a possible design, the first control information includes a first list, a second list, and information blocks of the plurality of communication groups; and/or the second control information includes a first list, a second list, and information blocks of the plurality of communication groups. The first list includes identification information of a first communication apparatus in the communication group, the second list includes identification information of a second communication apparatus in the communication group, and the information block of the communication group includes the first indication information of the communication group.

In a possible design, the first control information includes one or more information blocks, and the information block includes a third list, a fourth list, and first indication information; and/or the second control information includes one or more information blocks, and the information block includes a third list, a fourth list, and first indication information. The third list includes identification information of one or more first communication apparatuses, the fourth list includes identification information of one or more second communication apparatuses, and the first indication information indicates a time-frequency resource for communication between the first communication apparatus in the third list and the second communication apparatus in the fourth list.

In a possible design, the first control information further includes one or more of the following: sixth indication information of the communication group, seventh indication information of the communication group, eighth indication information of the communication group, ninth indication information of the communication group, and tenth indication information of the communication group; and/or the second control information includes one or more of the following: sixth indication information of the communication group, seventh indication information of the communication group, eighth indication information of the communication group, ninth indication information of the communication group, and tenth indication information of the communication group, where the sixth indication information of the communication group indicates a modulation and coding scheme MCS used by the communication group to perform communication, the seventh indication information of the communication group indicates a transport block size TBS used by the communication group to perform communication, the eighth indication information of the communication group indicates a beam pair used by the communication group to perform communication, the ninth indication information of the communication group indicates a DMRS sequence used by the communication group to perform communication, and the tenth indication information of the communication group indicates an antenna port number used by the communication group to perform communication.

In a possible design, the transceiver unit is further configured to receive eleventh indication information from the first communication apparatus, where the eleventh indication information indicates a beam/beam pair used by the first communication apparatus to send data; and/or the transceiver unit is further configured to receive twelfth indication information from the second communication apparatus, where the twelfth indication information indicates a beam/beam pair used by the second communication apparatus to receive data.

It should be noted that for a specific implementation of the network device in the eighth aspect, refer to behavior functions of the network device in the communication method provided in any one of the seventh aspect or the possible designs of the seventh aspect.

According to a ninth aspect, an embodiment of this application provides a network device. The network device may be a network device, or a chip or a system on chip in the network device. The network device may implement functions performed by the network device in the foregoing aspects or the possible designs, and the functions may be implemented by hardware. In a possible design, the network device may include a transceiver and a processor. The transceiver and the processor may be configured to support the network device in implementing the functions in any one of the seventh aspect or the possible designs of the seventh aspect. For example, the transceiver may be configured to send first control information to a first communication apparatus, where the first control information indicates the first communication apparatus to send data, the first control information includes identification information of one or more communication groups and first indication information of the communication group, the communication group includes the first communication apparatus and a second communication apparatus, the identification information of the communication group is used to determine the first communication apparatus and the second communication apparatus, and the first indication information of the communication group indicates a time-frequency resource for communication of the communication group. The transceiver may be further configured to send second control information to the second communication apparatus, where the second control information indicates the second communication apparatus to receive data, and the second control information includes the identification information of the one or more communication groups and the first indication information of the communication group. In another possible design, the network device may further include a memory. The memory is configured to store computer-executable instructions and data that are necessary for the network device. When the network device runs, the transceiver and the processor execute the computer-executable instructions stored in the memory, so that the network device performs the communication method in any one of the seventh aspect or the possible designs of the seventh aspect.

For a specific implementation of the network device in the ninth aspect, refer to behavior functions of the network device in the communication method provided in any one of the seventh aspect or the possible designs of the seventh aspect.

According to a tenth aspect, a communication apparatus is provided. The communication apparatus includes one or more processors. The one or more processors are configured to run a computer program or instructions. When the one or more processors execute the computer instructions or the instructions, the communication apparatus is enabled to perform the communication method in any one of the first aspect or the possible designs of the first aspect, perform the communication method in any one of the fourth aspect or the possible designs of the fourth aspect, or perform the communication method in any one of the seventh aspect or the possible designs of the seventh aspect.

In a possible design, the communication apparatus further includes one or more memories, the one or more memories are coupled to the one or more processors, and the one or more memories are configured to store the computer program or the instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eleventh aspect, a communication apparatus is provided. The communication apparatus includes an input/output interface and a logic circuit. The input/output interface is configured to input and/or output information. The logic circuit is configured to perform the communication method in any one of the first aspect or the possible designs of the first aspect, perform the communication method in any one of the fourth aspect or the possible designs of the fourth aspect, or perform the communication method in any one of the seventh aspect or the possible designs of the seventh aspect, and perform processing based on the information and/or generate the information. The information includes first control information and/or second control information, the first control information indicates a first communication apparatus to send data, the first control information includes identification information of one or more communication groups and first indication information of the communication group, the communication group includes the first communication apparatus and a second communication apparatus, the identification information of the communication group is used to determine the first communication apparatus and the second communication apparatus, the first indication information of the communication group indicates a time-frequency resource for communication of the communication group, the second control information indicates the second communication apparatus to receive data, and the second control information includes the identification information of the one or more communication groups and the first indication information of the communication group.

According to a twelfth aspect, a computer-readable storage medium is provided. The computer-readable storage medium stores computer instructions or a program, and when the computer instructions or the program is run on a computer, the computer is enabled to perform the communication method in any one of the first aspect or the possible designs of the first aspect, perform the communication method in any one of the fourth aspect or the possible designs of the fourth aspect, or perform the communication method in any one of the seventh aspect or the possible designs of the seventh aspect.

According to a thirteenth aspect, a computer program product including computer instructions is provided. When the computer program product runs on a computer, the computer is enabled to perform the communication method in any one of the first aspect or the possible designs of the first aspect, perform the communication method in any one of the fourth aspect or the possible designs of the fourth aspect, or perform the communication method in any one of the seventh aspect or the possible designs of the seventh aspect.

According to a fourteenth aspect, an embodiment of this application provides a computer program. When the computer program is run on a computer, the computer is enabled to perform the communication method in any one of the first aspect or the possible designs of the first aspect, perform the communication method in any one of the fourth aspect or the possible designs of the fourth aspect, or perform the communication method in any one of the seventh aspect or the possible designs of the seventh aspect.

For a technical effect brought by any design manner of the tenth aspect to the fourteenth aspect, refer to a technical effect brought by any possible design of the first aspect, refer to a technical effect brought by any possible design of the fourth aspect, or refer to a technical effect brought by any possible design of the seventh aspect. Details are not described again.

According to a fifteenth aspect, a communication system is provided. The communication system includes the first communication apparatus in the second aspect or the third aspect, the second communication apparatus in the fifth aspect or the sixth aspect, and the network device in the eighth aspect or the ninth aspect.

### BRIEF DESCRIPTION OF DRAWINGS

FIG. 1 is a schematic diagram of Uu communication according to an embodiment of this application;
FIG. 2 is a schematic diagram of sidelink communication according to an embodiment of this application;
FIG. 3 is a schematic diagram of a slot configuration according to an embodiment of this application;
FIG. 4 is a schematic diagram of IAB communication according to an embodiment of this application;
FIG. 5 is a schematic diagram of a two-layer structure according to an embodiment of this application;
FIG. 6 is a schematic diagram of a satellite communication system according to an embodiment of this application;
FIG. 7 is a schematic diagram of a satellite communication system according to an embodiment of this application;
FIG. 8 is a schematic diagram of a satellite communication system according to an embodiment of this application;
FIG. 9 is a schematic diagram of a satellite communication system according to an embodiment of this application;
FIG. 10 is a schematic diagram of an inter-star link communication system according to an embodiment of this application;
FIG. 11 is a schematic diagram of a cellular communication system according to an embodiment of this application;
FIG. 12 is a schematic diagram of a wireless projection communication system according to an embodiment of this application;
FIG. 13 is a schematic diagram of an IAB communication system according to an embodiment of this application;
FIG. 14 is a schematic diagram of composition of a communication apparatus according to an embodiment of this application;
FIG. 15 is a flowchart of a communication method according to an embodiment of this application;
FIG. 16 is a schematic diagram of a communication method according to an embodiment of this application;
FIG. 17 is a flowchart of a communication method according to an embodiment of this application;
FIG. 18 is a flowchart of a communication method according to an embodiment of this application;
FIG. 19 is a flowchart of a communication method according to an embodiment of this application;
FIG. 20 is a flowchart of a communication method according to an embodiment of this application;
FIG. 21 is a schematic diagram of a communication system according to an embodiment of this application;
FIG. 22 is a schematic diagram of a two-layer structure according to an embodiment of this application;
FIG. 23 is a schematic diagram of a satellite communication system according to an embodiment of this application;
FIG. 24 is a schematic diagram of an IAB communication system according to an embodiment of this application;
FIG. 25 is a schematic diagram of a communication system according to an embodiment of this application;
FIG. 26 is a schematic diagram of a communication system according to an embodiment of this application;
FIG. 27 is a schematic diagram of a communication system according to an embodiment of this application;
FIG. 28 is a schematic diagram of a communication system according to an embodiment of this application;
FIG. 29 is a schematic diagram of a frame structure of control information according to an embodiment of this application;
FIG. 30 is a schematic diagram of a frame structure of control information according to an embodiment of this application;
FIG. 31 is a schematic diagram of a frame structure of control information according to an embodiment of this application;
FIG. 32 is a schematic diagram of composition of a first communication apparatus according to an embodiment of this application;
FIG. 33 is a schematic diagram of composition of a second communication apparatus according to an embodiment of this application;
FIG. 34 is a schematic diagram of composition of a network device according to an embodiment of this application; and
FIG. 35 is a schematic diagram of composition of a communication apparatus according to an embodiment of this application.

### DESCRIPTION OF EMBODIMENTS

Before embodiments of this application are described, technical terms used in embodiments of this application are described.

Uu communication: An access network device may communicate with a terminal device through a Uu interface.

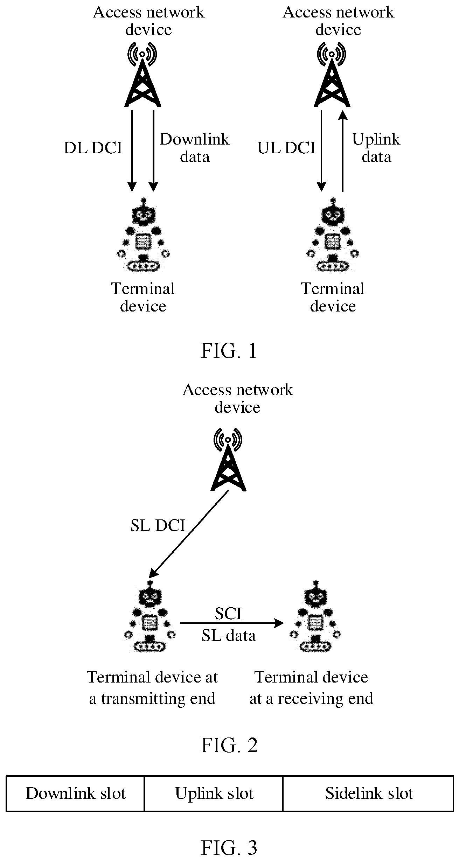

For example, as shown in FIG. 1, an access network device may send downlink (downlink, DL) downlink control information (downlink control information, DCI) to a terminal device, and the terminal device may receive, based on the DL DCI, downlink data sent by the access network device. Alternatively, the access network device may send uplink (uplink, UL) DCI to the terminal device, and the terminal device may send uplink data to the access network device based on the UL DCI. The access network device that sends DCI may serve as a communication end (for example, a receiving end or a transmitting end).

Sidelink (sidelink, SL) communication: Terminal devices may communicate with each other through a sidelink, and the sidelink may also be referred to as a sidelink. For example, sidelink communication may include an access network device scheduling mode and a terminal device autonomous selection mode.

As shown in FIG. 2, for the access network device scheduling mode, the access network device may send SL DCI to a terminal device at a transmitting end. The terminal device at the transmitting end may send sidelink control information (sidelink control information, SCI) and SL data to a terminal device at a receiving end based on the SL DCI. The terminal device at the receiving end may blindly detect and receive the SCI, and receive, based on the SCI, the SL data sent by the terminal device at the transmitting end. For the terminal device autonomous selection mode, the access network device may semi-statically configure a resource available to the terminal device at the transmitting end (for example, semi-statically configure the resource by using radio resource control (radio resource control, RRC) signaling, or semi-statically configure the resource by using RRC signaling and DCI signaling). The terminal device at the transmitting end may determine, through sensing (sensing), available resources, and send the SCI and the SL data to the terminal device at the receiving end on the available resources. The terminal device at the receiving end may blindly detect and receive the SCI, and receive, based on the SCI, the SL data sent by the terminal device at the transmitting end.

For example, in a new radio (new radio, NR) communication system, the access network device may send DCI 3_0 to the terminal device at the transmitting end to schedule a physical sidelink control channel (physical sidelink control channel, PSCCH) and a physical sidelink shared channel (physical sidelink shared channel, PSSCH). The terminal device at the transmitting end may send SCI to the terminal device at the receiving end, to schedule the PSSCH. The SCI may include first-stage (1^{st}-stage) SCI and second-stage (2^{nd}-stage) SCI. The 1^{st}-stage SCI may be used to schedule a PSSCH and a PSSCH of the 2^{nd}-stage SCI, and the 2^{nd}-stage SCI may be used to decode the PSSCH.

The DCI 3_0 may include the following information fields: a resource pool index (resource pool index), a time gap (time gap), a hybrid automatic repeat request (hybrid automatic repeat request, HARQ) process number, a new data indicator (new data indicator), a lowest identifier of an initial transmission subchannel, an information field of SCI format 1_A (indicating a time-frequency resource), a physical sidelink feedback channel-to-hybrid automatic repeat request (physical sidelink feedback channel-to-HARQ, PSFCH-to-HARQ) feedback timing indication, a physical uplink control channel (physical uplink control channel, PUCCH) resource indication, a configuration identifier, a counter sidelink assignment index (counter sidelink assignment index), and a padding bit (padding bits).

A format of the 1^{st}-stage SCI may be an SCI format 1_A, and the 1^{st}-stage SCI may include the following information fields: a priority (priority), frequency domain resource allocation, time domain resource allocation, a resource reservation periodicity, a demodulation reference signal (demodulation reference signal, DMRS) pattern, a 2^{nd}-stage SCI format, a beta offset indicator (beta offset indicator), a quantity of DMRS antenna ports (number of DMRS port), a modulation and coding scheme (modulation and coding scheme, MCS), an additional MCS table indicator (additional MCS table indicator), a PSFCH overhead indication (PSFCH overhead indication), and reserved (reserved).

The 2^{nd}-stage SCI may include two formats: an SCI format 2-A and an SCI format 2-B. Information fields included in both the two formats may be a HARQ process number, a new data indicator, a redundancy version, a source identifier (source ID), a destination identifier (destination ID), and a HARQ feedback enabled or disabled indication. Information fields included only in the SCI format 2-A may be a unicast/multicast/broadcast type indicator (cast type indicator) and a channel state information (channel state information, CSI) request. Information fields included only in the SCI format 2-B may be a zone identifier (zone ID) and a communication range requirement (communication range requirement). A range threshold in the communication range requirement may be used to determine whether to feed back a HARQ in multicast.

For example, as shown in Table 1, an example in which the unicast/multicast/broadcast type indicator is two bits is used. When a value of the two bits is 00, the two bits may indicate broadcast; when a value of the two bits is 01, the two bits may indicate multicast, and HARQ-ACK information may include an acknowledgment and a negative acknowledgment; when a value of the two bits is 10, the two bits may indicate unicast; or when a value of the two bits is 11, the two bits may indicate multicast, and HARQ-ACK information includes only a negative acknowledgment.

**Table 1**

| Value of a unicast/multicast/broadcast type indicator | Unicast/multicast/broadcast type |
|---|---|
| 00 | Broadcast |
| 01 | Multicast, where HARQ-ACK information includes an acknowledgment and a negative acknowledgment |
| 10 | Unicast |
| 11 | Multicast, where HARQ-ACK information includes only a negative acknowledgment |

It should be noted that, in sidelink communication, the access network device may indicate an available resource to the terminal device at the transmitting end by using DCI, and the terminal device at the transmitting end may indicate information such as an MCS and a DMRS of sidelink communication by using SCI.

In addition, in sidelink communication, as shown in FIG. 3, the access network device may alternatively semi-statically configure an uplink slot, a downlink slot, and a sidelink slot for the terminal device in a time division manner. The terminal device may perform uplink transmission based on the uplink slot configured by the access network device, perform downlink transmission based on the downlink slot, and perform sidelink transmission based on the sidelink slot.

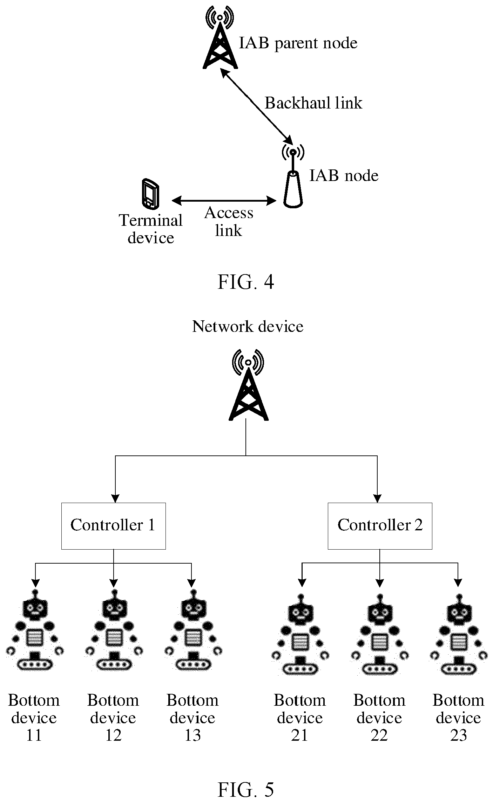

Integrated access and backhaul (integrated access and backhaul, IAB) communication: As shown in FIG. 4, an IAB parent node (IAB donor), an IAB node (IAB node), and a terminal device may be included. A link between the IAB parent node and the IAB node is a backhaul link (backhaul link), and a link between the IAB node and the terminal device is an access link (access link). A time division multiplexing manner is used for the backhaul link and the access link, and a backhaul slot, an access slot, and the like may be semi-statically configured.

Ultra-reliable low-latency communication (ultra-reliability low latency communication, URLLC) scenario: which is one of three application scenarios of a 5th generation mobile communication technology (5th generation mobile communication technology, 5G), and is also a typical scenario of 5G different from 2G/3G/4G. As a breakthrough point for the mobile communication industry to enter the vertical industry, URLLC is crucial to wide application of fields such as autonomous driving, industrial manufacturing, Internet of vehicles, and the smart grid, and is fully enhanced in the 3rd generation partnership project (3rd generation partnership project, 3GPP) NR R16 phase.

The URLLC scenario is mainly characterized by a low latency and high reliability. The URLLC scenario has a wide use scope, and requirements for a latency, reliability, and a bandwidth are different in different scenarios. For example, the URLLC scenario may include a power automation "telemetry, remote communication, and remote control" scenario, an Internet of vehicles scenario, and an industrial manufacturing scenario. A requirement of a low latency and high reliability in the industrial manufacturing scenario is the most challenging. The following describes the URLLC scenario by using the industrial manufacturing scenario as an example.

Industrial manufacturing scenario: A manufacturing device in a smart factory may access an enterprise cloud or an onsite control system through 5G, collect onsite environment data and production data, and analyze a production status in real time, to implement an entire unmanned and wireless production line. Intelligent industrial manufacturing has a high requirement on technical performance, and the high-end manufacturing industry has a very high requirement on a latency and stability of a workshop device. Specifically, the industry for the smart factory proposes a very specific performance requirement. For example, there are no more than 50 users in a service area, and in an end-to-end latency of 1 ms, communication service availability (communication system available, CSA) of a data packet with a size of 40 bytes needs to be between 99.9999% and 99.999999%. The CSA is defined as follows: If a packet received by a receiving end is damaged or is not received in time (that is, an allowed maximum end-to-end latency is exceeded), this service may be considered as unavailable.

For example, a two-layer structure may be used for deployment in the industrial manufacturing scenario. As shown in FIG. 5, an access network device, a controller, and a bottom device may be included. The controller may communicate with one or more bottom devices. The bottom device may be a sensor, an executor, or the like. When the controller sends data to the bottom device, the controller may be referred to as a transmitter device, and the bottom device may be referred to as a receiver device. When the bottom device sends data to the controller, the bottom device may be referred to as a transmitter device, and the controller may be referred to as a receiver device. The transmitter device may communicate with the receiver device by using the foregoing Uu communication, sidelink communication, or integrated access and backhaul communication through the access network device.

Specifically, for the Uu communication, the transmitter device may communicate with the access network device, and then the access network device communicates with the receiver device, to implement communication between the transmitter device and the receiver device. However, because the transmitter device communicates with the receiver device through the access network device, a communication latency is large.

For an access network device scheduling mode in the sidelink communication, because the access network device needs to perform scheduling, a communication latency is large. In addition, when the receiver device communicates with the transmitter device, the receiver device needs to blindly detect SCI sent by the transmitter device. If the receiver device further communicates with the access network device, the receiver device further needs to blindly detect DCI sent by the access network device. Consequently, blind detection complexity of the receiver device is high, and requirements for a low latency and low energy consumption cannot be met. In addition, based on the foregoing descriptions of the DCI and the SCI in the sidelink communication, there are repeated indication information fields in the DCI and the SCI, causing high signaling overheads. When a quantity of transmitter devices and a quantity of receiver devices gradually increase, high PSCCH resource overheads are caused.

For a terminal device autonomous selection mode in the sidelink communication, when the access network device semi-statically configures an available resource for the transmitter device, because the access network device does not determine specific devices that need to perform data transmission, the access network device reserves a resource for each device. Consequently, resource utilization is inflexible. When a quantity of transmitter devices and a quantity of receiver devices gradually increase, a resource requirement cannot be met.

For a sidelink slot in the sidelink communication, the access network device may semi-statically configure the sidelink slot in a time division manner. However, the transmitter device cannot flexibly invoke, based on a service status, a resource configured by the access network device. Consequently, resource utilization is inflexible. When a quantity of transmitter devices and a quantity of receiver devices gradually increase, a resource requirement cannot be met.

For the integrated access and backhaul communication, the access network device may semi-statically configure a backhaul slot and an access slot in a time division multiplexing manner. However, the transmitter device cannot flexibly invoke, based on a service status, a resource configured by the access network device. Consequently, resource utilization is inflexible. When a quantity of transmitter devices and a quantity of receiver devices gradually increase, a resource requirement cannot be met.

The industrial manufacturing scenario in which the two-layer structure is used for deployment shown in FIG. 5 is used as an example. A plurality of 3GPP companies may perform simulation modeling by using an NR/5G technology (including a grant-free configuration, a fast HARQ feedback capability 2, and optimal inter-cell coordinated resource scheduling). Simulation results of most companies show that required CSA can be achieved for a maximum of 20 users, that is, the NR/5G technology cannot meet a URLLC requirement in the industrial manufacturing scenario. As a result, corresponding use cases/service workshops/areas in intelligent work cannot be automated and wireless.

Specifically, an example in which both the transmitter device and the receiver device support a device processing capability 2 (that is, a fastest processing capability that can be supported by a device based on a framework (for example, an enhanced mobile broadband service) designed based on a current NR system) is used. It can be observed from latency analysis in the 3GPP technical report (technical report, TR) 38.824 that, in most scenarios, for Uu communication, HARQ transmission can be completed only once within 1 ms, which means that an initial block error rate (block error rate, BLER) should be set to 99.9999%. Even if first transmission of a URLLC data packet (it is assumed that a storage unit is a TB) is based on a grant-free configuration manner, and retransmission is based on a scheduling manner, because time-frequency resources in a grant-free configuration technology are all configured by using higher-layer RRC and are semi-statically configured, the time-frequency resources cannot match a current dynamic wireless channel of a device. In other words, spectral efficiency of Uu communication based on the grant-free technology is far lower than that of sidelink communication based on a dynamic scheduling technology. However, in the sidelink communication, HARQ transmission can be performed only once due to the device processing capability 2, and an initial transmission BLER is set to an excessively high value. As a result, spectral efficiency of the HARQ is also low, and 50 users in each service area cannot be supported.

In conclusion, how to design a communication method to reduce a communication latency and device power consumption and improve resource utilization flexibility becomes an urgent problem to be resolved.

To resolve this problem, an embodiment of this application provides a communication method. A first communication apparatus may receive first control information from a network device, and send data based on the first control information, where the first control information indicates the first communication apparatus to send the data, the first control information includes identification information of one or more communication groups and first indication information of the communication group, the communication group includes the first communication apparatus and a second communication apparatus, the identification information of the communication group is used to determine the first communication apparatus and the second communication apparatus, and the first indication information of the communication group indicates a time-frequency resource for communication of the communication group.

In this embodiment of this application, the first communication apparatus in the communication group may determine, based on the first control information sent by the network device, that the data needs to be sent, determine the time-frequency resource based on the first indication information in the first control information, and send the data based on the time-frequency resource. This can reduce a communication latency of a communication system and reduce device power consumption. In addition, in this embodiment of this application, the network device configures a time-frequency resource for each communication group by using the first control information, so that signaling overheads of control information can be reduced, and flexible resource allocation can be implemented, to improve communication performance.

The following describes implementations of embodiments of this application in detail with reference to the accompanying drawings in this specification.

The communication method provided in embodiments of this application may be used in any communication system. The communication system may be a 3GPP communication system, for example, a long term evolution (long term evolution, LTE) system, or may be an NR system in 5G or an NR vehicle-to-everything (vehicle-to-everything, V2X) system. The communication method may also be used in a system with hybrid networking of LTE and 5G, a device-to-device (device-to-device, D2D) communication system, a machine-to-machine (machine-to-machine, M2M) communication system, Internet of things (Internet of Things, IoT), narrowband Internet of things (narrowband internet of things, NB-IoT), a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a frequency division duplex (frequency division duplex, FDD) system, a time division duplex (time division duplex, TDD) system, a satellite communication system, a wireless projection communication system, an integrated access and backhaul communication system, and another next-generation communication system (for example, a 6G communication system), or may be a non-3GPP communication system. This is not limited.

The communication method provided in embodiments of this application may be used in various communication scenarios, for example, may be used in one or more of the following communication scenarios: enhanced mobile broadband (enhanced mobile broadband, eMBB), URLLC, machine type communication (machine type communication, MTC), massive machine type communications (massive machine type communications, mMTC), enhanced machine type communication (enhanced machine type communication, eMTC), IoT, narrowband Internet of things (narrowband internet of things, NB-IoT), customer premises equipment (customer premises equipment, CPE), augmented reality (augmented reality, AR), virtual reality (virtual reality, VR), D2D, V2X, vehicle-to-vehicle (vehicle-to-vehicle, V2V), and the like.

Embodiments of this application are applicable to both a homogeneous network scenario and a heterogeneous network scenario, and have no limitation on transmission points. Embodiments of this application may be used for coordinated multipoint transmission between macro base stations, between micro base stations, and between a macro base station and a micro base station, and are applicable to a frequency division multiplexing system, a time division multiplexing system, a duplex system, an access and backhaul system, a relay system, and the like. Embodiments of this application are applicable to a low-frequency scenario (sub 6G), a highfrequency scenario (above 6G), terahertz, optical communication, and the like. This is not limited.

The communication system provided in embodiments of this application may include one or more network devices and a plurality of communication apparatuses. When a communication apparatus communicates with another communication apparatus, two communication parties or a plurality of communication parties may be determined as one communication group, and each communication group may include at least two communication apparatuses. The network device may configure a time-frequency resource for the communication apparatus in the communication group, and the communication apparatus in the communication group may perform communication based on the time-frequency resource configured by the network device. It should be noted that the network device may be a communication apparatus in the communication group, or may be a communication apparatus outside the communication group.

For example, the plurality of communication apparatuses include a communication apparatus 1, a communication apparatus 2, a communication apparatus 3, and a communication apparatus 4. When the communication apparatus 1 communicates with the communication apparatus 2, the communication apparatus 1 and the communication apparatus 2 may be determined as one communication group. When the communication apparatus 3 communicates with the communication apparatus 4, the communication apparatus 3 and the communication apparatus 4 may be determined as one communication group. When the communication apparatus 2 simultaneously communicates with the communication apparatus 1 and the communication apparatus 3, the communication apparatus 1, the communication apparatus 2, and the communication apparatus 3 may be determined as one communication group.

It should be noted that in embodiments of this application, an example in which one communication group includes two communication apparatuses (that is, the first communication apparatus and the second communication apparatus below) is used to describe communication between communication apparatuses in a communication group. When one communication group includes at least three communication apparatuses, for descriptions of communication between the communication apparatuses in the communication group, refer to the following related descriptions of communication between the first communication apparatus and the second communication apparatus. Details are not described again.

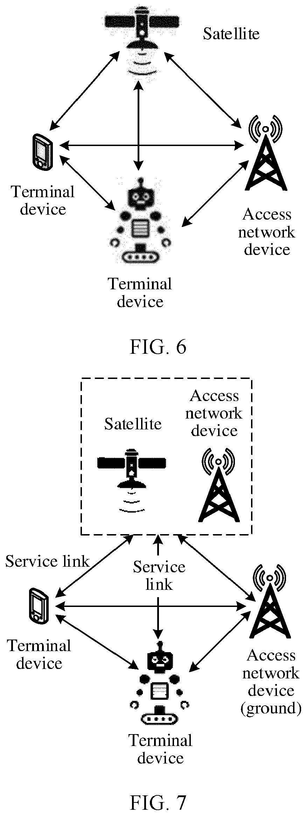

FIG. 6 to FIG. 13 are used below as an example to describe the communication system provided in embodiments of this application.

FIG. 6 shows a satellite communication system according to an embodiment of this application. As shown in FIG. 6, the satellite communication system may include a satellite, a terminal device, and an access network device.

The satellite in FIG. 6 may be an uncrewed aerial vehicle, a hot air balloon, a geostationary orbit satellite, a non-geostationary orbit satellite, a low-orbit satellite, a medium-orbit satellite, a geosynchronous orbit satellite, an uncrewed aerial system platform, a high-orbit satellite, or the like. Alternatively, the satellite may be a non-ground base station or a non-ground device, or the like. This is not limited.

The terminal device (terminal) in FIG. 6 may be a terminal device that supports a new air interface, and may access the satellite communication system through the air interface, and initiate a service such as a call or Internet access. The terminal device may also be referred to as user equipment (user equipment, UE), a mobile station (mobile station, MS), a mobile terminal (mobile terminal, MT), or the like. Specifically, the terminal device in FIG. 6 may be a mobile phone (mobile phone), a smartwatch, a tablet computer, a computer with a wireless transceiver function, a sensor, or the like. Alternatively, the terminal device may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having a UAV-to-UAV (UAV-to-UAV, U2U) communication capability, a personal digital assistant (personal digital assistant, PDA), a wireless communication module/chip in a smart factory, a wireless communication module/chip in a smart grid, wireless communication modules/chips in various devices, or the like. This is not limited.

The access network device in FIG. 6 may be any device with a wireless transceiver function, and is mainly configured to implement a radio physical control function, resource scheduling and radio resource management, radio access control, mobility management, and other functions, and provide a reliable wireless transmission protocol, a reliable data encryption protocol, and the like. Specifically, the access network device may be a device that supports wired access, or may be a device that supports wireless access. For example, the access network device may be an access network (access network, AN)/radio access network (radio access network, RAN) device, and includes a plurality of AN/RAN nodes. The AN/RAN node may be an access point (access point, AP), a NodeB (NodeB, NB), an enhanced NodeB (enhanced NodeB, eNB), a next generation base station (NR NodeB, gNB), a transmission reception point (transmission reception point, TRP), a transmission point (transmission point, TP), another access node, or the like. The AN/RAN node may be a base station in a next generation communication system (for example, a 6G communication system), and the base station in the 6G communication system may be an xNodeB.

For example, as shown in FIG. 7, a satellite may include an access network device carried on the satellite. When the access network device is carried on the satellite, the communication system shown in FIG. 6 may be the communication architecture shown in FIG. 7. As shown in FIG. 7, the access network device and the satellite move synchronously, and the access network device and the satellite may be considered as a whole. In this case, the satellite may be considered as an access network device, or it may be described as that the satellite works in a regenerative (regenerative) mode, that is, the satellite has a function of the access network device. The satellite having the function of the access network device may communicate with a terminal device and/or an access network device disposed on the ground, and a communication link between the satellite and the terminal device may be referred to as a service link (service link).

Based on the communication architecture shown in FIG. 7, because the satellite has the function of the access network device, that is, the satellite has a resource configuration capability, when a communication group including terminal devices needs to perform communication, a communication group including a terminal device and an access network device that is disposed on the ground needs to perform communication, a communication group including a terminal device and a satellite needs to perform communication, or a communication group including an access network device that is disposed on the ground and a satellite needs to perform communication, the satellite may serve as a network device to configure a time-frequency resource for the communication group that needs to perform communication, or the access network device disposed on the ground may serve as a network device to configure a time-frequency resource for the communication group that needs to perform communication. When the communication group including the terminal devices needs to perform communication, a terminal device in the communication group may alternatively serve as a network device to configure a time-frequency resource for the communication group.

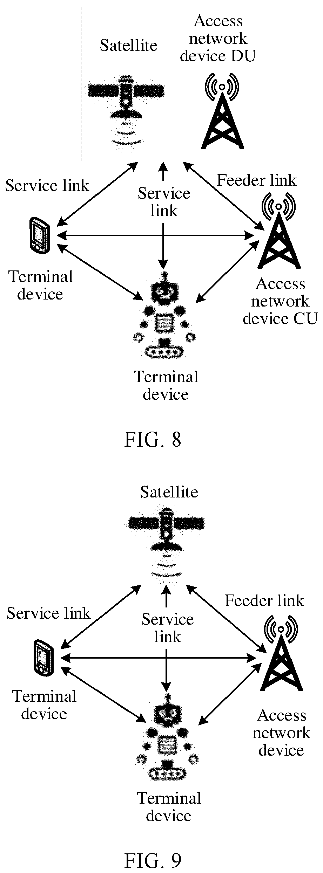

In another example, with reference to FIG. 8, an access network device may be carried on a satellite in a distributed manner based on a distributed unit (distributed unit, DU). When the access network device is carried on the satellite in the distributed manner based on the DU, the communication system shown in FIG. 6 may be the communication architecture shown in FIG. 8. As shown in FIG. 8, the access network device may include an access network device DU and an access network device central unit (central unit, CU). The access network device DU may be carried on the satellite, and the access network device CU may be disposed on the ground. The access network device DU may communicate with the access network device CU through a next generation (next generation, NG) interface, and a terminal device may establish a communication connection to the access network device CU through the access network device DU. In this case, the satellite may be considered as a part of the access network devices, or may be described as that the satellite works in a regenerative mode, that is, the satellite has a part of functions of the access network device. A communication link between the satellite and the terminal device may be referred to as a service link, and a communication link between the satellite and the access network device CU may be referred to as a feeder link (feeder link). It should be noted that the communication architecture in FIG. 8 may be considered as a special case of the communication architecture shown in FIG. 7. In FIG. 8, the access network device CU may also be described as a gateway (gateway), a ground station, or the like. This is not limited. The ground station may be configured to forward signaling and service data between the satellite and a core network.

Based on the communication architecture shown in FIG. 8, because the satellite has the part of functions of the access network device, that is, the satellite has a resource configuration capability, when a communication group including terminal devices needs to perform communication, a communication group including a terminal device and an access network device CU needs to perform communication, a communication group including a terminal device and a satellite needs to perform communication, or a communication group including an access network device CU and a satellite needs to perform communication, the satellite may serve as a network device to configure a time-frequency resource for the communication group that needs to perform communication, or the access network device CU may serve as a network device to configure a time-frequency resource for the communication group that needs to perform communication. When the communication group including the terminal devices needs to perform communication, a terminal device in the communication group may alternatively serve as a network device to configure a time-frequency resource for the communication group.

In still another example, with reference to FIG. 9, a terminal device may communicate with an access network device through a satellite forwarding signal. Specifically, a satellite may communicate with the access network device through an NG interface. The satellite may be a transmission/reception point (transmission/reception point, TRP) that provides wireless access for the terminal device. The TRP may transparently transmit data between the terminal device and the access network device, to implement a communication connection between the terminal device and the access network device. In this case, it may be described as that the satellite works in a transparent (transparent) transmission mode. A communication link between the satellite and the terminal device may be referred to as a service link, and a communication link between the satellite and the access network device may be referred to as a feeder link. It should be noted that the access network device may also be described as a gateway, a ground station, or the like. This is not limited. The ground station may be configured to forward signaling and service data between the satellite and a core network.

Based on the communication architecture shown in FIG. 9, because the satellite has no function of the access network device, that is, the satellite has no resource configuration capability, when a communication group including terminal devices needs to perform communication, a communication group including a terminal device and an access network device needs to perform communication, a communication group including a terminal device and a satellite needs to perform communication, or a communication group including an access network device and a satellite needs to perform communication, the access network device may alternatively serve as a network device to configure a time-frequency resource for the communication group that needs to perform communication. When the communication group including the terminal devices needs to perform communication, a terminal device in the communication group may alternatively serve as a network device to configure a time-frequency resource for the communication group.

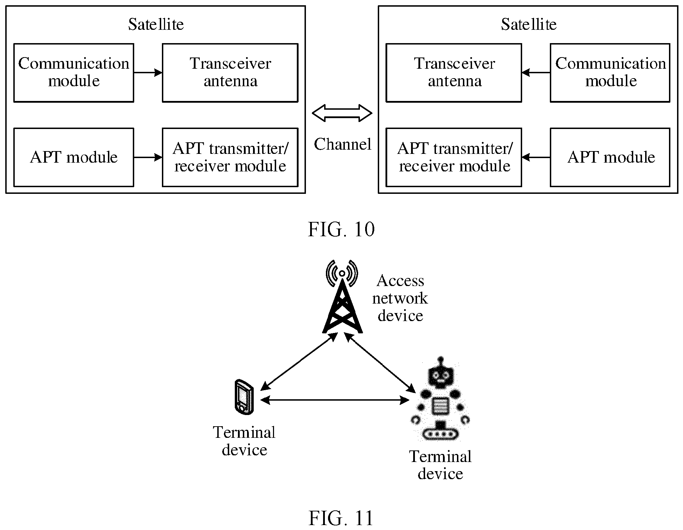

FIG. 10 shows an inter-satellite link communication system according to an embodiment of this application. The inter-satellite link communication system may include an acquisition, pointing and tracking (acquisition, pointing and tracking, APT) subsystem and a communication subsystem. The APT subsystem and the communication subsystem are independent systems.

The communication subsystem may be responsible for inter-satellite information transmission, and is a main body of the inter-satellite link communication system. Most communication subsystems are optical communication systems, some communication subsystems are microwave frequency band systems, and a single high-gain antenna is mostly used.

The APT subsystem may be responsible for acquisition, pointing, and tracking between satellites; determining a direction of arrival of an incident signal, which is acquisition; adjusting a transmit wave to aim at a receiving direction, which is pointing; and continuously adjusting pointing and acquisition in an entire communication process, which is tracking. To minimize impact of attenuation and interference in a channel and require high confidentiality and a high transmission rate, the APT subsystem needs to be adjusted in real time to constantly adapt to changes. The APT subsystem is an optical system, and optical pointing is difficult. Therefore, a direction needs to be adjusted mechanically.

As shown in FIG. 10, an inter-satellite communication system may include a plurality of satellites. The satellite may include a communication module, a transceiver antenna, an APT module, and an APT transmitter/receiver module. Signaling exchange and data transmission may be performed between satellites through an Xn interface.

When a communication group including satellites needs to perform communication, a satellite in the communication group may serve as a network device to configure a time-frequency resource for the communication group.

It should be noted that, for descriptions of the satellite, refer to related descriptions of the satellite in FIG. 6 to FIG. 9. Details are not described again.

FIG. 11 shows a cellular communication system according to an embodiment of this application. As shown in FIG. 11, the cellular communication system may include an access network device and a terminal device.

The cellular communication system may include a plurality of cells, each cell may include one access network device, and the access network device may provide a communication service for a plurality of terminal devices. For example, the access network device may include a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack.

For example, the terminal device may be located in a cell coverage area of the access network device. The terminal device may perform air interface communication with the access network device over an uplink (uplink, UL) or a downlink (downlink, DL). In a UL direction, the terminal device may send data to a network device through a physical uplink shared channel (physical uplink shared channel, PUSCH), or may send a PUCCH to the access network device. In a DL direction, the network device may send, to the terminal device, a physical downlink control channel (physical downlink control channel, PDCCH) carrying DCI, or may send data to the terminal through a physical downlink shared channel (physical downlink shared channel, PDSCH).

It should be noted that, for a next generation communication system, for example, a 6G communication system, the PUSCH may also be referred to as a physical transmission shared channel (physical transmission link shared channel, PTxSCH). The PUCCH may also be referred to as a physical transmission link control channel (physical transmission link control channel, PTxCCH). The PDCCH may also be referred to as a physical reception link control channel (physical reception link control channel, PRxCCH). The PDSCH may also be referred to as a physical reception link shared channel (physical reception link shared channel, PRxSCH). The DCI may also be referred to as receiving control information (receiving control information, RxCI).

When a communication group including terminal devices needs to perform communication, or a communication group including a terminal device and an access network device needs to perform communication, the access network device may serve as a network device to configure a time-frequency resource for the communication group that needs to perform communication. When the communication group including the terminal devices needs to perform communication, a terminal device in the communication group may alternatively serve as a network device to configure a time-frequency resource for the communication group.

In addition, for related descriptions of the access network device and the terminal device, refer to the related descriptions of the access network device and the terminal device in FIG. 6. Details are not described again.

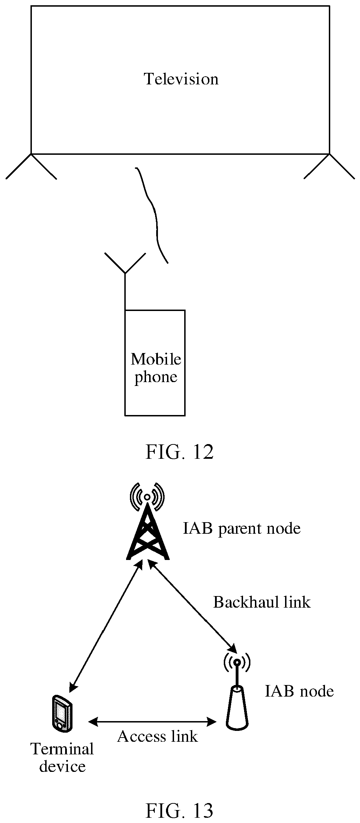

FIG. 12 shows a wireless projection communication system according to an embodiment of this application. In the wireless projection communication system, a picture of a terminal device (such as a mobile phone, a tablet computer, a notebook computer, or a computer) may be displayed "in real time" on a screen of another terminal device (such as a tablet computer, a notebook computer, a computer, a television, an all-in-one machine, or a projector), and displayed content may include various types of media information and a real-time operation picture.

As shown in FIG. 12, an example in which the wireless projection communication system includes a television and a mobile phone is used, and a picture on the mobile phone may be displayed on a screen of the television in real time.

When a communication group including terminal devices needs to perform communication, a terminal device in the communication group may serve as a network device to configure a time-frequency resource for the communication group.

FIG. 13 shows an IAB communication system according to an embodiment of this application. As shown in FIG. 13, the IAB communication system may include an IAB parent node, an IAB node, and a terminal device. A link between the IAB parent node and the IAB node may be referred to as a backhaul link, and a node between the IAB node and the terminal device may be referred to as an access link.

When a communication group including an IAB parent node and an IAB node needs to perform communication, a communication group including an IAB parent node and a terminal device needs to perform communication, or a communication group including an IAB node and a terminal device needs to perform communication, the IAB parent node or the IAB node may serve as a network device to configure a time-frequency resource for the communication group that needs to perform communication.

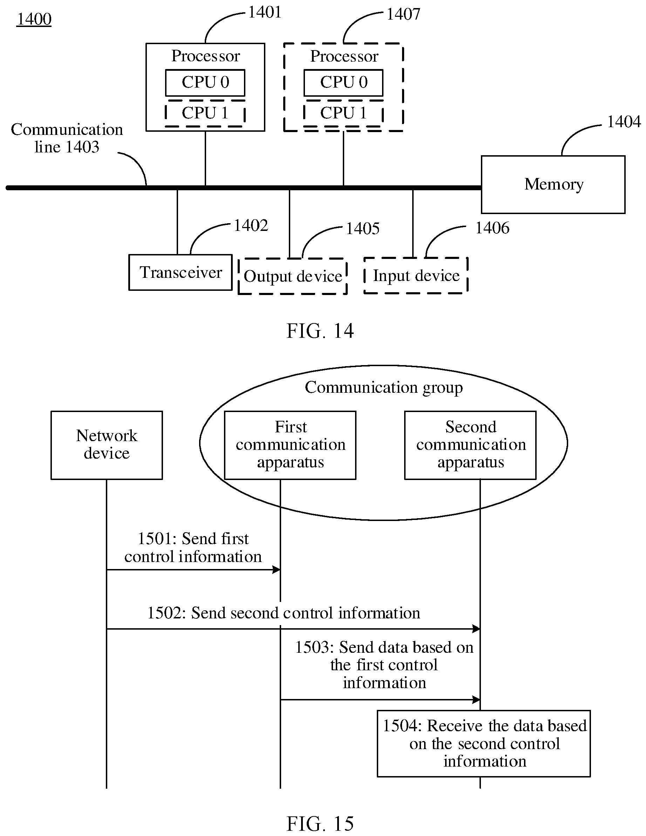

During specific implementation, as shown in FIG. 6 to FIG. 13, for example, a composition structure shown in FIG. 14 may be used for each network device and each communication apparatus, or components shown in FIG. 14 may be included in each network device and each communication apparatus. FIG. 14 is a schematic diagram of composition of a communication apparatus 1400 according to an embodiment of this application. The communication apparatus 1400 may be a network device, or a chip or a system on chip in the network device, or may be a communication apparatus, or a chip or a system on chip in the communication apparatus. As shown in FIG. 14, the communication apparatus 1400 includes a processor 1401, a transceiver 1402, and a communication line 1403.

Further, the communication apparatus 1400 may further include a memory 1404. The processor 1401, the memory 1404, and the transceiver 1402 may be connected through the communication line 1403.

The processor 1401 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1401 may be another apparatus having a processing function, for example, a circuit, a component, or a software module. This is not limited.

The transceiver 1402 is configured to communicate with another device or another communication network. The another communication network may be the Ethernet, a radio access network (radio access network, RAN), a wireless local area network (wireless local area network, WLAN), or the like. The transceiver 1402 may be a module, a circuit, a transceiver, or any apparatus that can implement communication.

The communication line 1403 is configured to transmit information between the components included in the communication apparatus 1400.

The memory 1404 is configured to store instructions. The instructions may be a computer program.

The memory 1404 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or the like. This is not limited.

It should be noted that the memory 1404 may be independent of the processor 1401, or may be integrated with the processor 1401. The memory 1404 may be configured to store instructions, program code, some data, or the like. The memory 1404 may be located inside the communication apparatus 1400, or may be located outside the communication apparatus 1400. This is not limited. The processor 1401 is configured to execute the instructions stored in the memory 1404, to implement a communication method provided in the following embodiments of this application.

In an example, the processor 1401 may include one or more CPUs, for example, a CPU 0 and a CPU 1 in FIG. 14.

In an optional implementation, the communication apparatus 1400 includes a plurality of processors. For example, in addition to the processor 1401 in FIG. 14, the communication apparatus 1400 may further include a processor 1407.

In an optional implementation, the communication apparatus 1400 further includes an output device 1405 and an input device 1406. For example, the input device 1406 is a device, for example, a keyboard, a mouse, a microphone, or a joystick, and the output device 1405 is a device, for example, a display or a speaker (speaker).

It should be noted that the communication apparatus 1400 may be a desktop computer, a portable computer, a network server, a mobile phone, a tablet computer, a wireless terminal, an embedded device, a chip system, or a device having a structure similar to a structure in FIG. 14. In addition, the composition structure shown in FIG. 8 does not constitute a limitation on the communication apparatus. In addition to the components shown in FIG. 14, the communication apparatus may include more or fewer components than those shown in the figure, some components may be combined, or different component arrangements may be used.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

The communication method shown in embodiments of this application may be used for communication between a network device and a communication group, and communication between communication apparatuses in the communication group. In embodiments of this application, an example in which a communication group includes a first communication apparatus and a second communication apparatus is used to describe the communication method provided in embodiments of this application. A network device may configure a time-frequency resource for the communication group, and the first communication apparatus and the second communication apparatus in the communication group may communicate with each other based on the time-frequency resource configured by the network device. The first communication apparatus may be a transmitter device in the communication group, the second communication apparatus may be a receiver device in the communication group, and the network device may be a communication apparatus outside the communication group. For example, the network device may be a third communication apparatus. Alternatively, the network device may be a communication apparatus in the communication group. For example, the network device may be the first communication apparatus, or the network device may be the second communication apparatus. This is not limited. For descriptions of the network device and the communication group, refer to the descriptions of the network device and the communication group in the communication systems shown in FIG. 6 to FIG. 13. Details are not described again. It should be noted that the network device, the first communication apparatus, and the second communication apparatus in the following embodiments may have the components shown in FIG. 14.

FIG. 15 is a flowchart of a communication method according to an embodiment of this application. As shown in FIG. 15, the method may include the following steps.

Step 1501: A network device sends first control information to a first communication apparatus. Correspondingly, the first communication apparatus receives the first control information from the network device.

The first control information may indicate the first communication apparatus to send data. The first control information may include identification information of one or more communication groups and first indication information of the communication group. The communication group may include the first communication apparatus and a second communication apparatus. The identification information of the communication group may be used to determine the first communication apparatus and the second communication apparatus. The first indication information of the communication group may indicate a time-frequency resource for communication of the communication group.

That the network device sends the first control information to the first communication apparatus to indicate the first communication apparatus to send the data may also be described as follows: The network device sends a grant for sending data to the first communication apparatus, or the network device schedules the first communication apparatus to send data, and the first communication apparatus may send the data to the second communication apparatus in a same communication group based on the grant for sending data.

Similar to the first control information, in the following step 1502, the network device may further send second control information to the second communication apparatus in the communication group, where the second control information may indicate the second communication apparatus to receive data, and the second control information may include the identification information of the one or more communication groups and the first indication information of the communication group.

That the network device sends the second control information to the second communication apparatus to indicate the second communication apparatus to receive the data may also be described as follows: The network device sends a grant for receiving data to the second communication apparatus, or the network device schedules the second communication apparatus to receive data, and the second communication apparatus may receive, based on the grant for receiving data, the data sent by the first communication apparatus in the same communication group.

It should be noted that, when sending the grant for sending data and the grant for receiving data, the network device may send the grant for sending data and the grant for receiving data by using different control information. For example, the network device may send the grant for sending data to the first communication apparatus by using the first control information, and send the grant for receiving data to the second communication apparatus by using the second control information. In this case, the first control information and the second control information are different control information.

Alternatively, the network device may send the grant for sending data and the grant for receiving data by using same control information. For example, the network device may send, to the first communication apparatus by using the first control information, the grant for sending data, and may also send, to the second communication apparatus by using the first control information, the grant for receiving data. Alternatively, the network device may send, to the first communication apparatus by using the second control information, the grant for sending the data, and may also send, to the second communication apparatus by using the second control information, the grant for receiving the data. In this case, the first control information and the second control information are same control information, the first control information may also be described as the second control information, and the second control information may also be described as the first control information.

Based on the foregoing descriptions, the first control information may indicate the first communication apparatus to send the data. Alternatively, the first control information may indicate the first communication apparatus to send the data, and may also indicate the second communication apparatus to receive the data.

The first control information may further include the identification information of the one or more communication groups, and the identification information of the communication group may be used to determine the first communication apparatus and the second communication apparatus.

For example, the identification information of the communication group may include identification information of the first communication apparatus and identification information of the second communication apparatus.

The identification information of the first communication apparatus may be used to identify the first communication apparatus. The identification information of the second communication apparatus may be used to identify the second communication apparatus. Identification information of a communication apparatus may be an identity (identity, ID) of the communication apparatus, a radio network temporary identifier (radio network temporary identifier, RNTI), an Internet protocol (internet protocol, IP) address of the communication apparatus, a media access control (media access control, MAC) address of the communication apparatus, an international mobile subscriber identity (international mobile subscriber identity, IMSI) of the communication apparatus, a globally unique temporary identifier (globally unique temporary UE identity, GUTI), a subscription permanent identifier (subscription permanent identifier, SUPI), or a generic public subscription identifier (generic public subscription identifier, GPSI), or may be a communication apparatus number specified in a protocol or negotiated in advance, and may further include at least one of the following: a unicast device identifier, a multicast group device identifier, a broadcast device identifier, or the like. This is not limited. The multicast group device identifier may also be described as a multicast device identifier, and communication apparatuses belonging to a same group correspond to a same multicast group device identifier (or multicast device identifier).

Based on the descriptions of the communication group in the communication system shown in FIG. 6 to FIG. 14, the first communication apparatus may be a communication apparatus such as an access network device, a terminal device, an IAB node, an IAB parent node, a relay node, customer premises equipment (customer premises equipment, CPE), or a satellite, and the second communication apparatus may also be a communication apparatus such as an access network device, a terminal device, an IAB node, an IAB parent node, a relay node, CPE, or a satellite. This is not limited.

For example, the identification information of the communication apparatus is a communication apparatus number negotiated in advance. It is assumed that an access network device number is 0, terminal device numbers are 1, 2, and 3, a relay node number is 4, and a satellite number is 5. When the first communication apparatus is a satellite, and the second communication apparatus is a relay node, the number 5 and the number 4 may be used as the identification information of the communication group, carried in the first control information, and sent to the first communication apparatus, and the first communication apparatus determines the first communication apparatus and the second communication apparatus based on the number 5 and the number 4.

For another example, the identification information of the communication apparatus includes at least one of the following: the unicast device identifier, the multicast group device identifier, and the broadcast device identifier. Unicast device identifiers 1, 2, 3, and 4 may respectively correspond to a communication apparatus 1, a communication apparatus 2, a communication apparatus 3, and a communication apparatus 4, to indicate that the communication apparatus is a unicast device. Alternatively, a broadcast device identifier 0 may separately correspond to a communication apparatus 1, a communication apparatus 2, a communication apparatus 3, and a communication apparatus 4, to indicate that all communication apparatuses are communication group devices, that is, broadcast devices. Alternatively, a multicast group device identifier 5 may correspond to a group 1 (the group 1 may include a communication apparatus 1 and a communication apparatus 2), and a multicast group device identifier 6 may correspond to a group 2 (the group 2 may include a communication apparatus 3 and a communication apparatus 4), to indicate that the communication apparatus is a multicast group device.

The unicast device identifier, the multicast group device identifier, the broadcast device identifier, and the like are carried in the identification information, so that flexible switching between unicast, multicast, and broadcast communication links can be implemented. The network device may flexibly schedule resources for various communication manners, to improve communication performance.

Optionally, the first control information may include two bit fields. A first bit field may include the identification information of the first communication apparatus, and a second bit field may include the identification information of the second communication apparatus. Alternatively, a first bit field includes the identification information of the second communication apparatus, and a second bit field includes the identification information of the first communication apparatus.

Alternatively, the first control information may include two bit fields. In the two bit fields, a first bit field may indicate to send data, and a second bit field may include the identification information of the communication apparatus (that is, the identification information of the first communication apparatus). The two bit fields may be combined to determine the first communication apparatus, and the first control information may further indicate the communication apparatus, indicated by the second bit field, to send data. The first control information may further include other two bit fields. In the other two bit fields, a first bit field may indicate received data, and a second bit field may include the identification information of the communication apparatus (that is, the identification information of the second communication apparatus). The other two bit fields may be combined to determine the second communication apparatus, and the first control information may further indicate the communication apparatus, indicated by the second bit field, to receive data.

Alternatively, in the first control information, the identification information of the first communication apparatus and the identification information of the second communication apparatus may alternatively be in a form of a communication group. For example, one bit field in the first control information includes identification information of a first communication apparatus 1 and identification information of a second communication apparatus 1, and the other bit field includes identification information of a first communication apparatus 2 and identification information of a second communication apparatus 2.

In another example, the identification information of the communication group may include the identification information of the communication group.

The identification information of the communication group may be used to identify the communication group.

Optionally, one or more communication groups may be preconfigured, and identification information of the communication group is configured for each communication group. The network device may include the identification information of the communication group in the first control information and send the first control information to the first communication apparatus. The first communication apparatus determines the first communication apparatus and the second communication apparatus based on the identification information of the communication group and the preconfigured communication group.

For example, the network device may configure information about the communication group for the communication apparatus, where the information about the communication group includes the identification information of the communication group, the identification information of the first communication apparatus in the communication group, and the identification information of the second communication apparatus in the communication group.

For example, the network device configures the identification information of the communication apparatus as the communication apparatus 1, the communication apparatus 2, the communication apparatus 3, and the communication apparatus 4. The network device may configure the identification information of the communication group as 0 (that is, a communication group 0) for the communication apparatus, where a first communication apparatus in the communication group 0 is the communication apparatus 1, a second communication apparatus in the communication group 0 is the communication apparatus 2; configure the identification information of the communication group as 1 (a communication group 1), where a first communication apparatus in the communication group 1 is the communication apparatus 3, and a second communication apparatus in the communication group 1 is the communication apparatus 2; and configure the identification information of the communication group as 2 (a communication group 2), where a first communication apparatus in the communication group 2 is the communication apparatus 2, and a second communication apparatus in the communication group 2 is the communication apparatus 4.

The identification information of the communication group and the first communication apparatus and the second communication apparatus that correspond to the communication group may be configured by the network device for the communication apparatus by using higher layer signaling or physical layer signaling, may be predefined in a communication protocol, or may be determined in another manner. This is not limited in this application.

Optionally, in the first control information, the identification information of the communication group may be in a form of the communication group. For example, a bit field in the first control information includes the identification information of the communication group 1, and the bit field indicates that the first control information indicates communication of the communication group 1. In other words, the first communication apparatus is the communication apparatus 3, the second communication apparatus is the communication apparatus 2, and the communication apparatus 3 sends data to the communication apparatus 2. For example, a bit field in the first control information includes the identification information of the communication group 2, and the bit field indicates that the first control information indicates communication of the communication group 2. In other words, the first communication apparatus is the communication apparatus 2, the second communication apparatus is the communication apparatus 4, and the communication apparatus 2 sends data to the communication apparatus 4.

In still another example, the identification information of the communication group may include the identification information of the second communication apparatus.

The first communication apparatus may send a resource request to the network device. The resource request may include the identification information of the second communication apparatus. The network device may configure, based on the resource request, a time-frequency resource for the first communication apparatus and the second communication apparatus that is indicated by the resource request, and send the first control information to the first communication apparatus. In this case, the first control information may include the identification information of the second communication apparatus, but does not need to include the identification information of the first communication apparatus, so that signaling overheads of the first control information can be reduced. After receiving the first control information, the first communication apparatus may determine the second communication apparatus based on the first control information.

Optionally, the first control information may include two bit fields. In the two bit fields, a first bit field may indicate to receive data, and a second bit field may include the identification information of the communication apparatus (that is, the identification information of the second communication apparatus). The two bit fields may be combined to determine the second communication apparatus. In addition, the first control information may further indicate the communication apparatus, indicated by the second bit field, to receive data.

Optionally, the first control information may include two bit fields. In the two bit fields, a first bit field may indicate to send data, and a second bit field may include the identification information of the communication apparatus (that is, the identification information of the second communication apparatus). The second communication apparatus may be determined based on the second bit field. In addition, the first communication apparatus that successfully receives the first control information may determine to send data to the communication apparatus indicated by the second bit field.

In still another example, the identification information of the communication group may include the identification information of the first communication apparatus.

Optionally, the first control information may include two bit fields. In the two bit fields, a first bit field may indicate to send data, and a second bit field may include the identification information of the communication apparatus (that is, the identification information of the first communication apparatus). The two bit fields may be combined to determine the first communication apparatus. In addition, the first control information may further indicate the communication apparatus indicated by the second bit field to send data.

Optionally, the first control information may include two bit fields. In the two bit fields, a first bit field may indicate to receive data, and a second bit field may include the identification information of the communication apparatus (that is, the identification information of the first communication apparatus). The first communication apparatus may be determined based on the second bit field. In addition, the second communication apparatus that successfully receives the first control information may determine to receive data from the communication apparatus indicated by the second bit field.

Optionally, the first control information may include a bit field, where the bit field indicates to send data or receive data. In this case, a communication apparatus that successfully receives the first control information may determine to send data or receive data. Optionally, the first control information may not include the identification information of the communication apparatus, provided that a communication apparatus that successfully receives the first control information knows that data is sent or data is received on a time-frequency resource indicated by the first control information. When the first control information indicates the communication apparatus to send data, a communication apparatus that receives the data may not need to be known. When the first control information indicates the communication apparatus to receive data, a communication apparatus that sends the data may not need to be known.

Optionally, a meaning of a bit field in the first control information or information indicated by the bit field may be predefined in the communication protocol, or may be notified by the network device to the communication apparatus by using higher layer signaling or physical layer signaling. Specifically, this is not limited in this application.

In this embodiment of this application, the network device may centrally schedule various communication links based on the first control information. Because time-frequency resources are dynamically shared, the network device may flexibly configure a time-frequency resource for each communication group, to improve resource utilization and utilization flexibility.

The communication links may include a Uu communication link, a sidelink, a backhaul link, an access link, a unicast link, a multicast link, a broadcast link, and other communication links. This is not limited.

Optionally, the first control information further includes one or more of the following: sixth indication information of the communication group, seventh indication information of the communication group, eighth indication information of the communication group, ninth indication information of the communication group, and tenth indication information of the communication group.

The sixth indication information of the communication group indicates an MCS used by the communication group to perform communication, the seventh indication information of the communication group indicates a transport block size (transport block set, TBS) used by the communication group to perform communication, the eighth indication information of the communication group indicates a beam pair used by the communication group to perform communication, the ninth indication information of the communication group indicates a DMRS sequence used by the communication group to perform communication, and the tenth indication information of the communication group indicates an antenna port number used by the communication group to perform communication.

The network device may determine channel state information for communication of the communication group based on feedback of the first communication apparatus, artificial intelligence (artificial intelligence, AI), sensing, path prediction, or the like. Therefore, the first communication apparatus and the second communication apparatus may not need to additionally detect DCI, SCI, or the like, to reduce control information overheads and improve resource utilization. The first communication apparatus and the second communication apparatus can quickly determine scheduling information, to reduce a communication latency.

The beam pair may include a transmit beam and/or a receive beam. The transmit beam is precoding or a beam of the first communication apparatus (that is, a transmitter device) in the communication group, and may also be referred to as transmit precoding. The receive beam is precoding or a beam of the second communication apparatus (that is, a receiver device) in the communication group, and may also be referred to as receive precoding. When communicating with the second communication apparatus, the first communication apparatus may perform communication by using a beam in the beam pair. To be specific, the first communication apparatus sends data to the second communication apparatus by using the transmit beam in the beam pair, and/or the second communication apparatus receives data from the first communication apparatus by using the receive beam in the beam pair.

The network device may determine and indicate a beam pair including a transmit beam and/or a receive beam for each communication group through global coordination, so that interference between communication links of the communication groups can be reduced, and communication performance can be improved.

Specifically, when indicating the beam pair of the communication group by using the eighth indication information, the network device may perform indication in a form of indicating a reference beam pair, a reference direction, reference precoding, or a reference beam. For example, the reference beam pair is indicated by using the eighth indication information, or a beam direction is indicated by using the eighth indication information.

For example, there are four beam pairs configured by the network device by using higher layer signaling. Assuming that the network device uses two bits in the first control information to indicate a beam pair of a communication group, the network device may set the two bits to 00 to indicate a first beam pair, set the two bits to 01 to indicate a second beam pair, set the bits to 10 to indicate a third beam pair, or set the bits to 11 to indicate a fourth beam pair.

Optionally, the first control information may further indicate whether to update the beam pair of the communication group. If the beam pair of the communication group is not updated, the first communication apparatus and the second communication apparatus in the communication group communicate with each other by using a beam pair indicated by the network device last time.

Optionally, the communication apparatus in the communication group may alternatively report a beam/beam pair for communication to the network device, so that the network device coordinates beam communication based on the beam/beam pair reported by the communication apparatus in the communication group, to configure a beam pair for the communication group.

For example, the first communication apparatus may send eleventh indication information to the network device, and the network device may determine, based on the eleventh indication information, a beam pair used by the communication group to perform communication.

The eleventh indication information may indicate a beam/beam pair used by the first communication apparatus to send data. For example, the eleventh indication information may indicate an optimal beam/optimal beam pair used by the first communication apparatus to send data.

For example, the second communication apparatus may alternatively send twelfth indication information to the network device, and the network device may determine, based on the twelfth indication information, a beam pair used by the communication group to perform communication.

The twelfth indication information may indicate a beam/beam pair used by the second communication apparatus to receive data. For example, the twelfth indication information may indicate an optimal beam/optimal beam pair used by the second communication apparatus to receive data.

For example, the network device may further determine, based on both the eleventh indication information and/or the twelfth indication information, a beam pair used by the communication group to perform communication, to coordinate beam communication, reduce communication interference between communication groups, and improve communication performance.

Based on the foregoing descriptions of the first control information, the first control information may be higher layer signaling, or may be physical layer signaling. The higher layer signaling may be RRC signaling, MAC signaling, or other higher layer signaling, and the physical layer signaling may be DCI, RxCI, or other physical layer signaling. This is not limited.

Optionally, when sending the first control information to the first communication apparatus, the network device may send the first control information by part, to reduce signaling overheads of the first control information, reduce blind detection complexity of the communication apparatus, implement concurrent processing of the communication apparatus, reduce a communication latency, and improve communication performance.

For example, the first control information may include at least one of the following three types of information: first-type information for channel estimation, second-type information for decoding a data channel, and third-type information for sending transmission control information (transport control information, TxCI).

The first-type information may include information indicating a time-frequency resource (that is, the first indication information), DMRS sequence indication information (that is, the ninth indication information), and the like. The second-type information may include an MCS (that is, the sixth indication information), a HARQ process number, a new data indicator (new data indicator, NDI), and the like. The third-type information may include a resource for sending a control channel, transmit power control (transmit power control, TPC), a code block group (code block group, CBG) configuration, channel state information (channel state information, CSI) trigger information, channel sounding reference signal (sounding reference signal, SRS) trigger information, and the like.

Specifically, the first-type information may be sent as first control information 1, the second-type information may be sent as first control information 2, and the third-type information may be sent as first control information 3. Alternatively, the first-type information and the second-type information may be sent as first control information 1, and the third-type information may be sent as first control information 2. Alternatively, the first-type information may be sent as first control information 1, and the second-type information and the third-type information may be sent as first control information 2.

Based on the foregoing descriptions of the first control information 1, the first control information 2, and the first control information 3, when there are a plurality of communication groups, the first control information 1 may include first-type information of one or more communication groups, the first control information 2 may include second-type information of the one or more communication groups, and the first control information 3 may include third-type information of the one or more communication groups. Alternatively, the first control information 1 may include first-type information and second-type information of one or more communication groups, and the first control information 2 may include third-type information of the one or more communication groups. Alternatively, the first control information 1 may include first-type information of one or more communication groups, and the first control information 2 may include second-type information and third-type information of the one or more communication groups.

First control information that includes various types of information of a plurality of communication groups may be referred to as group first control information. For example, the group first control information may include a plurality of information blocks, and each communication group may correspond to one information block.

Signaling overheads of the first control information can be reduced by classifying the first control information and by using the group first control information for transmission. For example, compared with that N CRCs need to be added to N pieces of first control information corresponding to N communication groups, one CRC needs to be added to one piece of first control information corresponding to a plurality of communication groups, so that signaling overheads can be reduced.

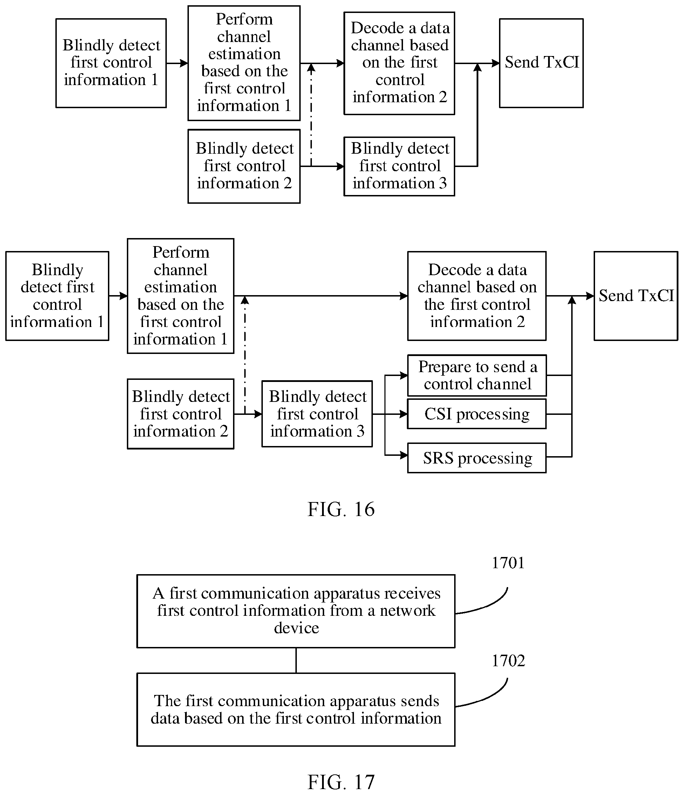

In addition, as shown in FIG. 16, for example, the network device classifies the first control information into the first control information 1, the first control information 2, and the first control information 3 for sending. After blindly detecting the first control information 1, the first communication apparatus may perform channel estimation based on the first control information 1, and the first communication apparatus may blindly detect the first control information 2 concurrently. When decoding a data channel based on the first control information 2, the first communication apparatus may blindly detect the first control information 3 concurrently; and then perform operations, such as preparing to send a control channel, performing CSI processing, and performing SRS processing, based on the first control information 3, and send TxCI. Alternatively, the first communication apparatus may concurrently process an operation of decoding a data channel based on the first control information 2 and operations, such as preparing to send a control channel, performing CSI processing, and performing SRS processing, based on the first control information 3, to reduce a communication latency and improve communication performance.

Step 1502: The network device sends the second control information to the second communication apparatus. Correspondingly, the second communication apparatus receives the second control information from the network device.

The second control information may indicate the second communication apparatus to receive the data. The second control information may include the identification information of the one or more communication groups and the first indication information of the communication group. The communication group includes the first communication apparatus and the second communication apparatus. The identification information of the communication group is used to determine the first communication apparatus and the second communication apparatus. The first indication information of the communication group indicates the time-frequency resource for communication of the communication group.

For descriptions of the second control information, the identification information of the communication group in the second control information, and the first indication information, refer to the descriptions of the first control information, the identification information of the communication group in the first control information, and the first indication information in step 1501. Details are not described again.

Optionally, the first control information may further include one or more of the following: the sixth indication information of the communication group, the seventh indication information of the communication group, the eighth indication information of the communication group, the ninth indication information of the communication group, and the tenth indication information of the communication group.

The sixth indication information of the communication group indicates the MCS used by the communication group to perform communication, the seventh indication information of the communication group indicates the transport block size (transport block set, TBS) used by the communication group to perform communication, the eighth indication information of the communication group indicates the beam pair used by the communication group to perform communication, the ninth indication information of the communication group indicates the DMRS sequence used by the communication group to perform communication, and the tenth indication information of the communication group indicates the antenna port number used by the communication group to perform communication.

For descriptions of the sixth indication information of the communication group to the tenth indication information of the communication group, refer to the related descriptions of the sixth indication information of the communication group to the tenth indication information of the communication group in step 1501. Details are not described again.

Optionally, when sending the second control information to the second communication apparatus, the network device may send the second control information by part, to reduce signaling overheads of the second control information, reduce blind detection complexity of the communication apparatus, implement concurrent processing of the communication apparatus, reduce a communication latency, and improve communication performance.

For specific descriptions of sending the second control information by part, refer to the related descriptions of sending the first control information by part in step 1501. Details are not described again.

Step 1503: The first communication apparatus sends the data based on the first control information.

The first communication apparatus may send the data to the second communication apparatus based on the first control information.

Step 1504: The second communication apparatus receives the data based on the second control information.

The second communication apparatus may receive, based on the second control information, the data sent by the first communication apparatus.

Based on the communication method shown in FIG. 15, the network device may indicate, by using the first control information, the first communication apparatus in the communication group to send the data, and indicate, by using the second control information, the second communication apparatus in the communication group to receive the data. In addition, the network device may further indicate the time-frequency resource for communication of the communication group by using the control information, so that a communication latency of a communication system can be reduced, and device power consumption can be reduced. In addition, in this embodiment of this application, the network device configures a time-frequency resource for each communication group by using the control information, so that signaling overheads of control information can be reduced, and flexible resource allocation can be implemented, to improve communication performance.

Based on the methods shown in FIG. 15 and FIG. 16, alternatively, as shown in FIG. 17, the communication method provided in embodiments of this application may be described from a perspective of the first communication apparatus.

FIG. 17 is a flowchart of a communication method according to an embodiment of this application. As shown in FIG. 17, the method may include the following steps.

Step 1701: A first communication apparatus receives first control information from a network device.

Step 1702: The first communication apparatus sends data based on the first control information.

Specifically, for descriptions of the first control information, refer to the descriptions of the first control information in step 1501. Details are not described again.

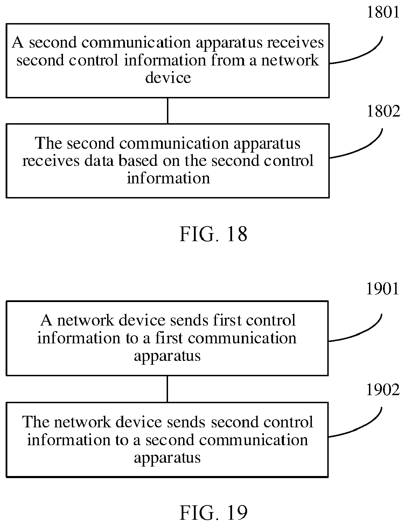

Based on the methods shown in FIG. 15 to FIG. 17, alternatively, as shown in FIG. 18, the communication method provided in embodiments of this application may be described from a perspective of the second communication apparatus.

Step 1801: A second communication apparatus receives second control information from a network device.

Step 1802: The second communication apparatus receives data based on the second control information.

Specifically, for descriptions of the second control information, refer to the descriptions of the second control information in step 1502. Details are not described again.

Based on the methods shown in FIG. 15 to FIG. 18, alternatively, as shown in FIG. 19, the communication method provided in embodiments of this application may be described from a perspective of the network device.

Step 1901: A network device sends first control information to a first communication apparatus.

Step 1902: The network device sends second control information to a second communication apparatus.

Specifically, for descriptions of the first control information and the second control information, refer to the descriptions of the first control information and the second control information in step 1501 and step 1502. Details are not described again.

It should be noted that there is no limitation on a sequence of performing step 1901 and step 1902. Step 1901 may be performed before step 1902; step 1902 may be performed before step 1901; or step 1901 and step 1902 are performed simultaneously. This is not limited.

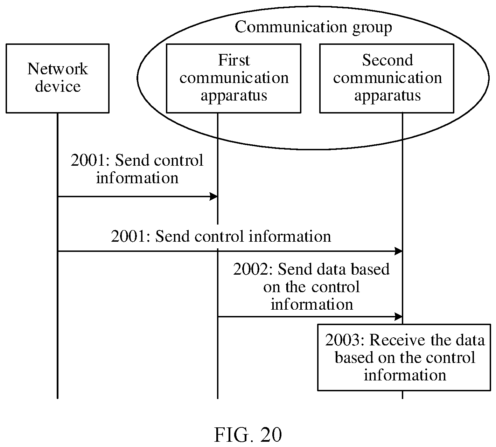

In addition, based on step 1501 and step 1502, when the first control information and the second control information are the same control information, as shown in FIG. 20, step 1501 and step 1502 in FIG. 15 may be replaced with the following step 2001, step 1503 in FIG. 15 may be replaced with the following step 2002, and step 1504 in FIG. 15 may be replaced with the following step 2003.

Step 2001: A network device sends control information to a communication apparatus in a communication group. Correspondingly, the communication apparatus (that is, a first communication apparatus and a second communication apparatus) in the communication group receive the control information.

The control information may indicate communication of one or more communication groups. The communication group may include the first communication apparatus and the second communication apparatus. The communication of the communication group may include indicating the first communication apparatus to send data and/or indicating the second communication apparatus to receive data. The control information may include identification information of the one or more communication groups and first indication information of the communication group. The identification information of the communication group is used to determine the first communication apparatus and the second communication apparatus. The first indication information of the communication group indicates a time-frequency resource for communication of the communication group.

Step 2002: The first communication apparatus sends data based on the control information.

Step 2003: The second communication apparatus receives the data based on the control information.

Based on the methods in FIG. 15 to FIG. 20, the network device may further adjust the transmitter device and the receiver device in the communication group by adjusting the identification information of the communication group in the first control information and the second control information, to flexibly switch the transmitter device and the receiver device, and implement unified scheduling and flexible switching of communication links.

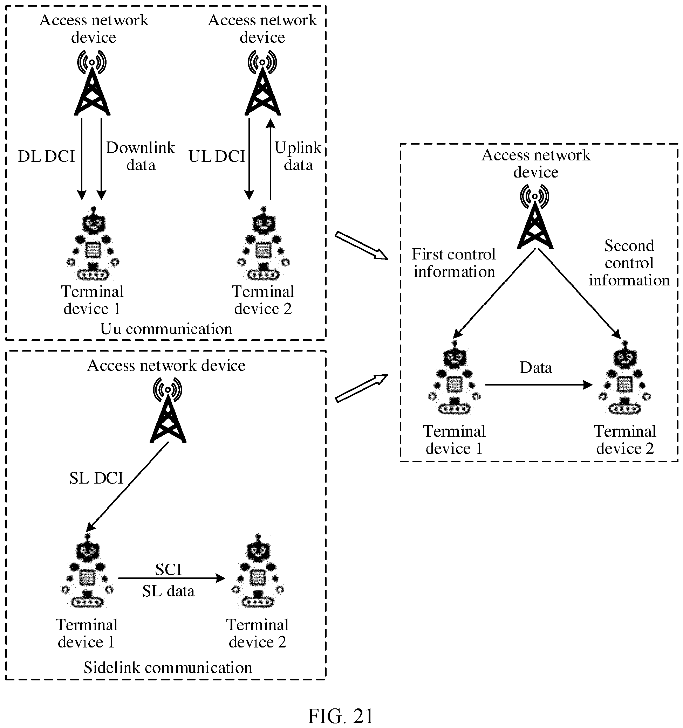

For example, a communication system includes an access network device, a terminal device 1, and a terminal device 2. As shown in FIG. 21, the access network device (that is, a network device) may send first control information to the terminal device 1 (a first communication apparatus), and send second control information to the terminal device 2 (that is, a second communication apparatus). The terminal device 1 may send data to the terminal device 2 based on the first control information, and the terminal device 2 may receive, based on the second control information, the data sent by the terminal device 1, to implement communication between the terminal device 1 and the terminal device 2.

Compared with that in the Uu communication in FIG. 1, the terminal device 1 first communicates with the access network device, and then the access network device communicates with the terminal device 2, which requires two times of Uu communication, in this embodiment of this application, the terminal device 1 and the terminal device 2 may directly communicate with each other through a sidelink based on the control information sent by the access network device, to reduce a communication latency.

Compared with that in the sidelink communication in FIG. 2, the terminal device 1 first receives DCI sent by the access network device, and sends SCI to the terminal device 2 based on the DCI, the terminal device 1 may not need to send SCI, to reduce signaling overheads of the control information. The terminal device 2 does not need to receive the SCI, to reduce blind detection complexity of the terminal device 2 and reduce a communication latency. In addition, because resources are dynamically shared, the access network device serving as the network device may perform global coordination, and flexibly configure a time-frequency resource for each communication group. This can improve resource utilization and utilization flexibility, and improve communication performance.

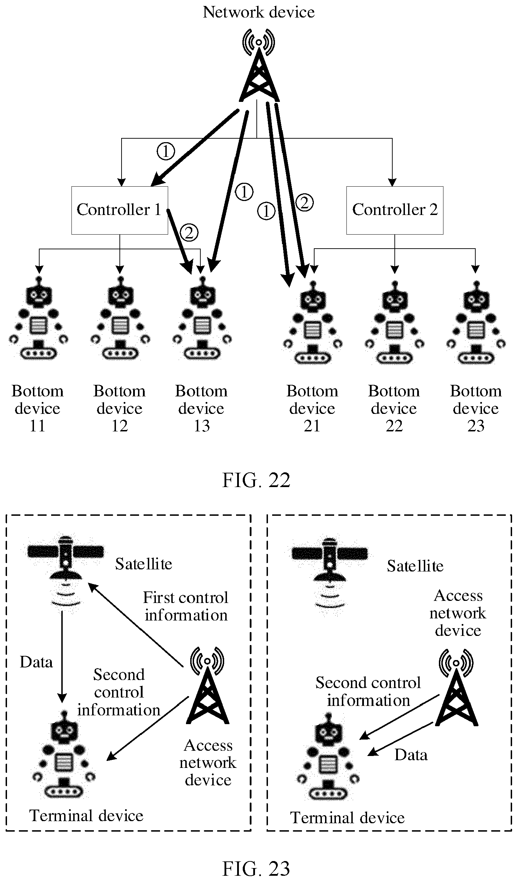

For example, based on the two-layer structure shown in FIG. 5, as shown in FIG. 22, based on the methods provided in embodiments of this application, communication between a controller and a bottom device can be implemented in two steps (step ①: The access network device respectively sends first control information and second control information to the controller and the bottom device. Step CD: The controller and the bottom device communicate with each other based on the first control information and the second control information), so that fast sidelink scheduling can be implemented, a communication latency is reduced, SCI signaling overheads are reduced, flexible resource allocation is implemented, and communication performance is improved.

In addition, in FIG. 21, the access network device may indicate the terminal device 1 and the terminal device 2 by setting identification information of a communication group in the control information, to implement communication between the terminal device 1 and the terminal device 2. Alternatively, the access network device may indicate the access network device and the terminal device 1 (or the terminal device 2) by setting identification information of a communication group in the control information, to implement communication between the access network device and the terminal device 1 (or the terminal device 2). In this case, the access network device serves as the network device and also serves as the first communication apparatus, and the terminal device 1 (or the terminal device 2) serves as the second communication apparatus, to implement a process in which the access network device sends data to the terminal device 1 (or the terminal device 2). Alternatively, the access network device serves as the network device and also serves as the second communication apparatus, and the terminal device 1 (or the terminal device 2) serves as the first communication apparatus, to implement a process in which the terminal device 1 (or the terminal device 2) sends data to the access network device.

For example, the two-layer structure shown in FIG. 22 is used as an example. In an initial transmission process, the access network device may serve as the network device to respectively send the first control information and the second control information to the controller and the bottom device, and the controller and the bottom device may communicate with each other through a sidelink based on the first control information and the second control information. If initial transmission fails, communication may be performed through a Uu link during retransmission. To be specific, the access network device serves as the network device and also serves as the first communication apparatus, and sends data to the bottom device (or the controller) through the Uu link based on the first control information.

In embodiments of this application, the network device flexibly indicates the identification information of the communication group, to implement fast switching of communication links and reduce a communication latency.

In another example, a satellite communication system includes a satellite, an access network device, and a terminal device. As shown in FIG. 23, the access network device may serve as a network device to respectively send first control information and second control information to the satellite and the terminal device, and the satellite and the terminal device may communicate with each other based on the first control information and the second control information. The satellite may serve as a first communication apparatus to receive the first control information, and send data to the terminal device based on the first control information. The terminal device may serve as a second communication apparatus to receive the second control information, and receive, based on the second control information, the data sent by the satellite. Alternatively, the terminal device may serve as a first communication apparatus to receive the first control information, and send data to the satellite based on the first control information. The satellite may serve as a second communication apparatus to receive the second control information, and receive, based on the second control information, the data sent by the terminal device. In this way, the access network device uniformly coordinates space-air-ground communication links, and implements fast communication between the satellite and the terminal device, to reduce a communication latency and reduce control information overheads.

In addition, when satellite communication transmission performance is poor, the access network device may alternatively schedule the access network device to communicate with the terminal device. The access network device may indicate the access network device and the terminal device by using the identification information of the communication group in the first control information and the second control information. In this way, flexible switching between a satellite communication link and a ground access network device communication link is implemented, a latency is reduced, and communication performance is improved.

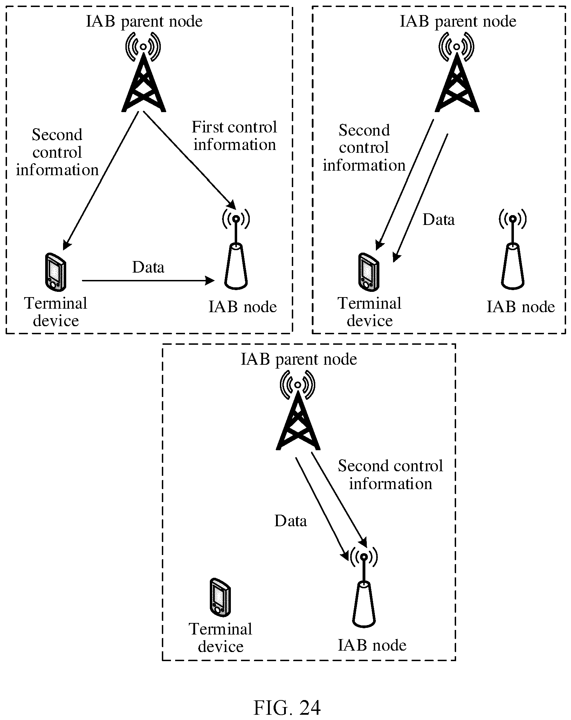

In still another example, an IAB communication system includes an IAB node, an IAB parent node, and a terminal device. As shown in FIG. 24, the IAB parent node may serve as a network device to respectively send first control information and second control information to the IAB node and the terminal device, and the IAB node and the terminal device may communicate with each other based on the first control information and the second control information. The IAB node may serve as a first communication apparatus to receive the first control information, and send data to the terminal device based on the first control information. The terminal device may serve as a second communication apparatus to receive the second control information, and receive, based on the second control information, the data sent by the IAB node. Alternatively, the terminal device may serve as a first communication apparatus to receive the first control information, and send data to the IAB node based on the first control information. The IAB node may serve as a second communication apparatus to receive the second control information, and receive, based on the second control information, the data sent by the terminal device. In this way, fast communication between the IAB node and the terminal device is implemented, a communication latency is reduced, and control information overheads are reduced.

In addition, when IAB node communication transmission performance is poor, the IAB parent node may alternatively schedule the IAB parent node to communicate with the terminal device. The IAB parent node may indicate the IAB parent node and the terminal device by using the identification information of the communication group in the first control information and the second control information. In this way, flexible switching between an IAB communication link and a ground communication link is implemented, a latency is reduced, and communication performance is improved.

In addition, the IAB parent node may alternatively schedule the IAB parent node to communicate with the IAB node. The IAB parent node may indicate the IAB parent node and the IAB node by using the identification information of the communication group in the first control information and the second control information. In this way, flexible switching between a backhaul link and an access link is implemented, dynamic resource sharing is implemented, a latency is reduced, and communication performance is improved.

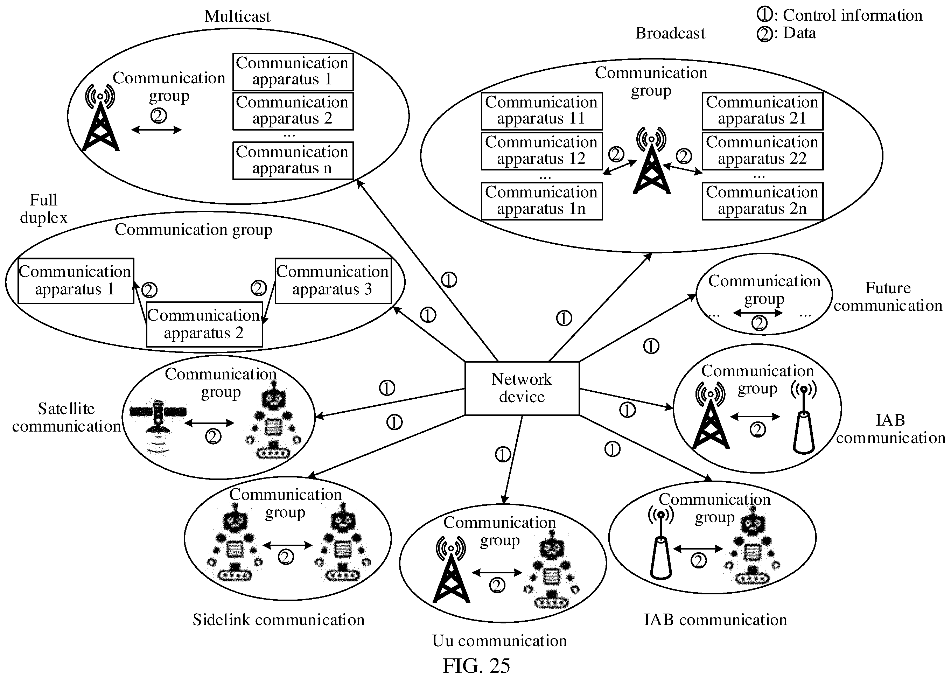

Based on the foregoing examples, as shown in FIG. 25, the network device may flexibly switch the transmitter device and the receiver device by adjusting the first communication apparatus and the second communication apparatus that are indicated by the identification information of the communication group in the first control information and the second control information, to implement flexible switching between communication links. For example, the communication link may include a Uu link, a sidelink, an IAB link (an access link and a backhaul link), a satellite communication link, a full-duplex communication link, a unicast communication link, a multicast communication link, a broadcast communication link, a future communication link, or the like. In addition, all communication links may share a HARQ process, and a receiving HARQ and a sending HARQ only need to be distinguished. For a time-frequency resource indicated by the first indication information, there may be no need to distinguish between an uplink, a downlink, a sidelink, access, backhaul, or the like, and sending or receiving only needs to be distinguished. In addition, a format of the first control information may be the same as that of the second control information, so that blind detection complexity can be reduced, and a communication latency can be reduced. In the communication methods provided in embodiments of this application, unicast, multicast, and broadcast resources are dynamically shared, and the network device may uniformly schedule various communication links, to improve resource utilization and resource utilization flexibility.

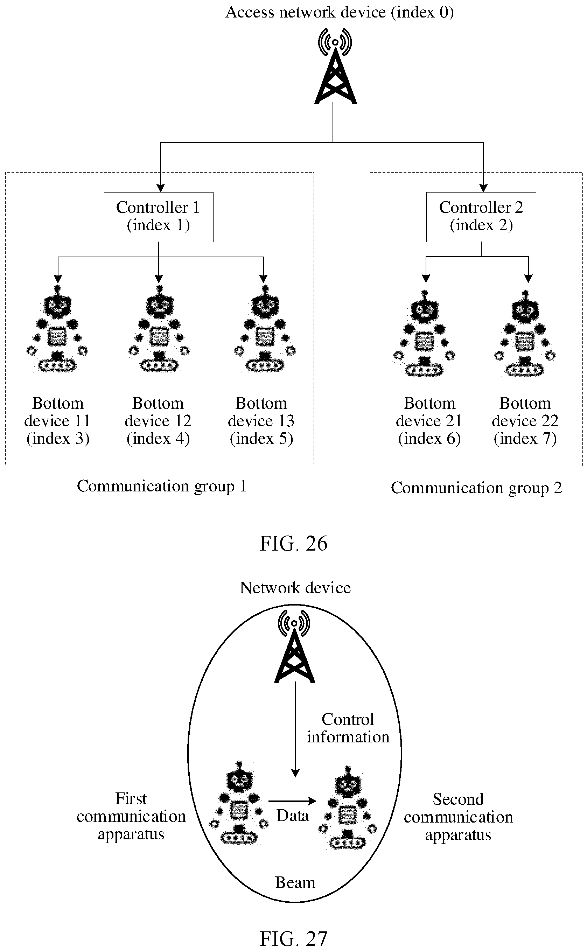

Based on the descriptions of the first control information and the second control information in the communication methods shown in FIG. 15 to FIG. 25, with reference to FIG. 26 to FIG. 31, radio network identifiers (radio network temporary identifier, RNTI) of the first control information and the second control information and a structure of the control information are described.

The first control information and the second control information may be sent/received in a unicast manner, that is, the first control information and the second control information are used to schedule only one communication apparatus or communication apparatuses in one communication group to send and/or receive data. The first control information and the second control information may include identification information of one communication group and first indication information of the communication group. The first control information and the second control information may alternatively be sent/received in a multicast manner, that is, the first control information and the second control information may be used to schedule a plurality of communication apparatuses or communication apparatuses in a plurality of communication groups to send and/or receive data. The first control information and the second control information may include identification information of a plurality of communication groups and first indication information of each communication group. A same format and a same quantity of bits are used for the first control information and the second control information, to reduce blind detection complexity of the communication apparatus.

The following describes the RNTIs of the first control information and the second control information.

The network device may implement an error detection function of the communication apparatus by adding cyclic redundancy check (cyclic redundancy check, CRC) bits to information bits of the first control information and the second control information, and perform scrambling in the CRC bits by using different types of RNTIs, to implicitly encode the RNTI in the CRC bits. It should be understood that different RNTIs can be used to identify communication apparatuses and distinguish between functions of control information.

For example, the network device may scramble the first control information based on first configuration information, and scramble the second control information based on second configuration information.

In a first possible design, the first configuration information includes a group RNTI.

This design is applicable to a scenario in which the control information is transmitted in a unicast manner or a multicast manner.

The group RNTI may be shared by a group of communication apparatuses. The group of communication apparatuses may include a first communication apparatus and a second communication apparatus. The group of communication apparatuses may also be described as a communication apparatus group.

For example, as shown in FIG. 26, a two-layer structure is used as an example. Because a controller may communicate with a subordinate bottom device, the controller and the subordinate bottom device may be considered as a communication apparatus group. For example, the communication apparatus group includes a communication apparatus group 1 and a communication apparatus group 2. The communication apparatus group 1 may include a controller 1, a bottom device 11, a bottom device 12, and a bottom device 13 (which may further include an access network device and/or a controller 2), and may correspond to a group RNTI 1. The communication apparatus group 2 may include a controller 2, a bottom device 21, and a bottom device 22 (which may further include an access network device), and may correspond to a group RNTI 2.

Optionally, identification information of each communication apparatus may be as follows: Identification information of the access network device may be an index 0, identification information of the controller 1 may be an index 1, identification information of the controller 2 may be an index 2, identification information of the bottom device 11 may be an index 3, identification information of the bottom device 12 may be an index 4, identification information of the bottom device 13 may be an index 5, identification information of the bottom device 21 may be an index 6, and identification information of the bottom device 22 may be an index 7.

For example, a network device is the access network device, a first communication apparatus is the controller 1, and a second communication apparatus is the bottom device 11. The access network device may set identification information of a communication group in first control information and second control information to the index 1 and the index 3, scramble the first control information by using the group RNTI 1, and send the first control information to the controller 1, and scramble the second control information by using the group RNTI 1, and send the second control information to the bottom device 11.

Optionally, a bottom device 31 may also exist. The bottom device 31 may have no controller, and is directly connected to an access network device.

In addition, based on the foregoing descriptions of the identification information of the communication group, an example in which the identification information of the communication group includes the identification information of the first communication apparatus and the identification information of the second communication apparatus is used. For a group of communication apparatuses, a quantity of bits of the identification information of the first communication apparatus may be determined based on a quantity S of pieces of the identification information of the first communication apparatus in the communication apparatus group, for example, log₂S is rounded up, or may be determined based on a quantity A of pieces of identification information of all communication apparatuses in the communication apparatus group, for example, log₂A is rounded up.

For example, if the quantity S of pieces of the identification information of the first communication apparatus in the communication apparatus group is 4, the quantity of bits of the identification information of the first communication apparatus may be 2.

For another example, if the quantity A of pieces of identification information of the communication apparatuses in the communication apparatus group is 8, the quantity of bits of the identification information of the first communication apparatus may be 3.

The quantity of bits of the identification information of the second communication apparatus may be determined based on a quantity R of pieces of the identification information of the second communication apparatus in the communication apparatus group, for example, log₂R is rounded up, or may be determined based on the quantity A of pieces of identification information of all the communication apparatuses in the communication apparatus group, for example, log₂A is rounded up.

For example, if the quantity of pieces of the identification information of the second communication apparatus in the communication apparatus group is 4, the quantity of bits of the identification information of the second communication apparatus may be 2.

For another example, if the quantity A of pieces of identification information of the communication apparatuses in the communication apparatus group is 8, the quantity of bits of the identification information of the second communication apparatus may be 3.

The first communication apparatus included in the communication apparatus group may be the same as or different from the second communication apparatus included in the communication apparatus group. The quantity S of pieces of the identification information of the first communication apparatus in the communication apparatus group may be the same as or different from the quantity R of pieces of the identification information of the second communication apparatus in the communication apparatus group.

Example 1: The identification information of the first communication apparatus is the index 1 (the controller 1), and the identification information of the second communication apparatus is the index 3 (the bottom device 11).

Example 2: The identification information of the first communication apparatus is the index 0 (the access network device), and the identification information of the second communication apparatus is the index 3 (the bottom device 11).

Example 3: The identification information of the first communication apparatus is the index 1 (the access network device), and the identification information of the second communication apparatus is the index 2 (the controller 1).

In the example 1 and the example 2, flexible switching between the Uu link and the sidelink may be implemented, that is, data may be from the controller 1, or may be from the access network device. The first communication apparatus may perform flexible switching. In the example 1 and the example 3, full duplex of the controller 1 may be implemented, that is, the controller 1 serves as the first communication apparatus to send data, and also serves as the second communication apparatus to receive data.

Optionally, as shown in FIG. 27, when the first communication apparatus in the communication group is close to the second communication apparatus, the network device may send the first control information and the second control information through a same beam with a same power, to implement fast scheduling and reduce control information overheads. In addition, the first communication apparatus and the second communication apparatus may simultaneously receive the control information, quickly determine the time-frequency resource indicated by the network device, and perform channel estimation, to reduce a latency.

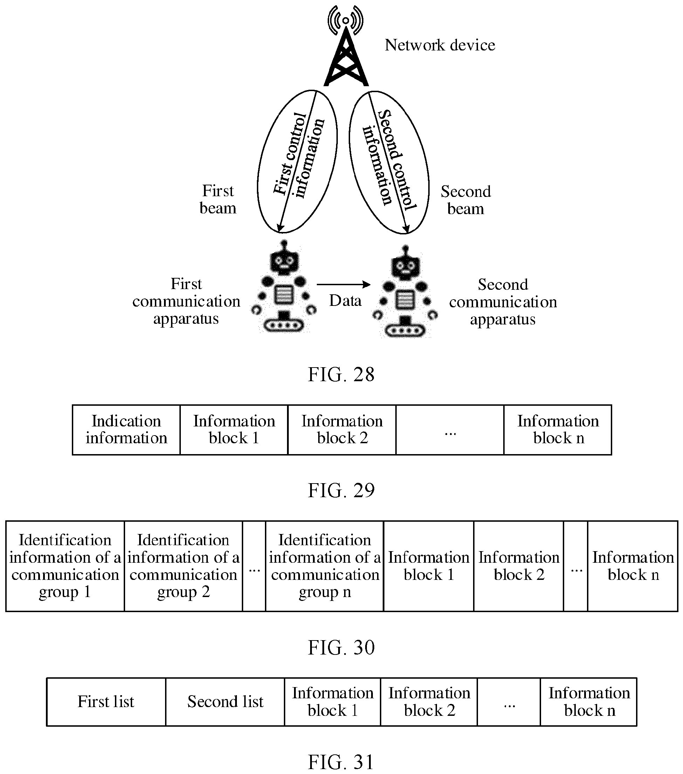

Optionally, as shown in FIG. 28, when the first communication apparatus in the communication group is far away from the second communication apparatus, and a power/beam difference is large, the network device may send the control information through different powers and/or different beams. For example, the network device sends the first control information to the first communication apparatus through a first beam, and sends the second control information to the second communication apparatus through a second beam, to implement fast scheduling and reduce control information overheads. The first communication apparatus and the second communication apparatus may respectively receive the first control information and the second control information, quickly determine the time-frequency resource indicated by the network device, and perform channel estimation, to reduce a latency.

In a second possible design, the first configuration information includes a group sending RNTI.

This design is applicable to a scenario in which the control information is transmitted in a unicast manner or a multicast manner.

The group sending RNTI may be shared by one group of first communication apparatuses. That is, the network device may scramble, by using the group sending RNTI, the first control information sent to the first communication apparatus.

Optionally, the group sending RNTI may include only the identification information of the first communication apparatus. That is, the group sending RNTI may be generated based on the identification information of the first communication apparatus. In this case, the first control information may not include the identification information of the first communication apparatus, and the first communication apparatus may determine, through CRC check, whether the first communication apparatus is a first communication apparatus corresponding to the first control information.

Optionally, when the second possible design is used in combination with the following sixth possible design, the first control information scrambled by using the group sending RNTI and the second control information scrambled by using a group receiving RNTI may be sent on a same time-frequency resource, for example, transmitted through space division multiplexing; or may be sent on different time-frequency resources, for example, transmitted through time division/frequency division multiplexing. This is not limited.

In a third possible design, the first configuration information includes a first sending RNTI.

This design is applicable to a scenario in which the control information is transmitted in a unicast manner.

The first sending RNTI may be used when the communication apparatus serves as the first communication apparatus. That is, when a communication apparatus serves as the first communication apparatus for communication, the network device may scramble, by using the first sending RNTI, the first control information sent to the first communication apparatus.

The communication apparatus may detect first control information based on the first sending RNTI, where the first control information is used to schedule the communication apparatus to send data.

In a fourth possible design, the first configuration information includes a first sending RNTI and a first receiving RNTI.

This design is applicable to a scenario in which the control information is transmitted in a unicast manner.

The first sending RNTI may be used when the communication apparatus serves as the first communication apparatus, and the first receiving RNT may be used when the communication apparatus serves as the second communication apparatus. That is, when a communication apparatus serves as the first communication apparatus for communication, the network device may scramble, by using the first sending RNTI, the first control information sent to the first communication apparatus. When the communication apparatus serves as the second communication apparatus for communication, the network device may scramble, by using the first receiving RNTI, the second control information sent to the second communication apparatus.

This possible design is applicable to a full-duplex communication apparatus. The communication apparatus may detect both the first control information and the second control information. The first control information is used to schedule the communication apparatus to send data, and the second control information is used to schedule the communication apparatus to receive data.

In a fifth possible design, the second configuration information includes a group RNTI.

This design is applicable to a scenario in which the control information is transmitted in a unicast manner or a multicast manner.

For descriptions of the group RNTI, refer to the related descriptions of the group RNTI in the first possible design. Details are not described again.

In a sixth possible design, the second configuration information includes a group receiving RNTI.

This design is applicable to a scenario in which the control information is transmitted in a unicast manner or a multicast manner.

The group receiving RNTI may be shared by one group of second communication apparatuses. That is, the network device may scramble, by using the group receiving RNTI, the second control information sent to the second communication apparatus.

Optionally, the group receiving RNTI may include only the identification information of the second communication apparatus. That is, the group receiving RNTI may be generated based on the identification information of the second communication apparatus. In this case, the second control information may not include the identification information of the second communication apparatus, and the second communication apparatus may determine, through CRC check, whether the second communication apparatus is a second communication apparatus corresponding to the second control information.

Optionally, when the foregoing second possible design is used in combination with the sixth possible design, the first control information scrambled by using the group sending RNTI and the second control information scrambled by using a group receiving RNTI may be sent on a same time-frequency resource, for example, transmitted through space division multiplexing; or may be sent on different time-frequency resources, for example, transmitted through time division/frequency division multiplexing. This is not limited.

In a seventh possible design, the second configuration information includes a second receiving RNTI.

This design is applicable to a scenario in which the control information is transmitted in a unicast manner.

The second receiving RNTI may be used when the communication apparatus serves as the second communication apparatus. That is, when a communication apparatus serves as the second communication apparatus for communication, the network device may scramble, by using the second receiving RNTI, the second control information sent to the second communication apparatus.

The communication apparatus may detect the second control information based on the second receiving RNTI, where the second control information is used to schedule the communication apparatus to receive data.

In an eighth possible design, the second configuration information includes a second sending RNTI and a second receiving RNTI.

This design is applicable to a scenario in which the control information is transmitted in a unicast manner.

The second sending RNTI may be used when the communication apparatus serves as the first communication apparatus, and the second receiving RNT may be used when the communication apparatus serves as the second communication apparatus. That is, when a communication apparatus serves as the first communication apparatus for communication, the network device may scramble, by using the second sending RNTI, the first control information sent to the first communication apparatus. When the communication apparatus serves as the second communication apparatus for communication, the network device may scramble, by using the second receiving RNTI, the second control information sent to the second communication apparatus.

This possible design is applicable to a full-duplex communication apparatus. The communication apparatus may detect both the first control information and the second control information. The first control information is used to schedule the communication apparatus to send data, and the second control information is used to schedule the communication apparatus to receive data.

Optionally, the network device may send the first configuration information to the first communication apparatus, and the first communication apparatus may descramble, based on the first configuration information, the first control information sent by the network device.

Optionally, the network device may send the second configuration information to the second communication apparatus, and the second communication apparatus may descramble, based on the second configuration information, the second control information sent by the network device.

A multicast manner is used below as an example to describe structures of the first control information and the second control information. A same format and a same quantity of bits are used for the first control information and the second control information, to reduce blind detection complexity of the communication apparatus. Because the format of the first control information is the same as that of the second control information, descriptions of the control information is uniformly used below. It should be understood that the following control information may be the first control information, or may be the second control information.

In the multicast manner, the control information may include identification information of a plurality of communication groups and first indication information of the communication group. The network device may scramble the control information by using a group RNTI.

In a first possible design, the control information may include information blocks of a plurality of communication groups, and the information block of the communication group may include identification information of the communication group and first indication information of the communication group.

For example, the control information includes information blocks of n communication groups, and identification information of the communication group includes identification information of a first communication apparatus and identification information of a second communication apparatus. The control information may include an information block 1 of a communication group 1, an information block 2 of a communication group 2, ..., and an information block n of a communication group n:
the information block 1: first indication information 1, identification information 1 of a first communication apparatus, identification information 1 of a second communication apparatus, ...;
the information block 2: the first indication information 1, identification information 2 of a first communication apparatus, identification information 2 of a second communication apparatus (the communication group 1 and the communication group 2 may multiplex a time-frequency resource), ...;
the information block 3: first indication information 2, the identification information 1 of the first communication apparatus, identification information 3 of a second communication apparatus, ...;
the information block n: first indication information m, identification information x of a first communication apparatus, identification information y of a second communication apparatus, ....

Optionally, a quantity of information blocks included in the control information may be predefined in a communication protocol. For example, the communication protocol predefines that the quantity of information blocks included in the control information is P. Alternatively, the quantity of information blocks included in the control information may be notified by the network device to the communication apparatus by using signaling. For example, the quantity of information blocks included in the control information may be a positive integer, for example, 5, 8, or 10. This is not limited.

Optionally, a quantity of bits of the control information may be predefined in the communication protocol, or may be notified by the network device to the communication apparatus by using higher layer signaling or physical layer signaling. For example, the quantity of bits of the control information may be a positive integer, for example, 50, 68, or 80. This is not limited.

Optionally, a quantity of bits of each information block in the control information may be fixed, or may be notified by the network device to the communication apparatus by using higher layer signaling or physical layer signaling. For example, the quantity of bits of each information block is B. For example, the quantity of bits of each information block may be 8 bits, 10 bits, 20 bits, or 40 bits. This is not limited. A quantity of bits required by scheduling information of the communication group may be determined based on a candidate time-frequency resource set and/or a candidate MCS set that are/is configured by the network device for the communication apparatus by using higher layer signaling.

Optionally, different information blocks may correspond to different quantities of bits. The network device may indicate, to a communication apparatus, a start bit location of an information block corresponding to the communication apparatus and a quantity of bits of the information block.

If the quantity of bits required by the scheduling information of the communication group is less than B bits, the network device may pad the most significant bit or the least significant bit with zero, and the communication apparatus may truncate the required least significant bit or the required most significant bit to interpret the information block.

If a quantity of bits required by the communication apparatus is greater than B bits, the network device may truncate the least significant bit for transmission, and the communication apparatus may pad the most significant bit with a bit for interpretation.

Optionally, a quantity of bits of the identification information of the first communication apparatus in the information block may be determined based on a quantity S of pieces of the identification information of the first communication apparatus in the communication apparatus group, for example, log₂S is rounded up, or may be determined based on a quantity A of pieces of identification information of all communication apparatuses in the communication apparatus group, for example, log₂A is rounded up.

For example, if the quantity S of pieces of the identification information of the first communication apparatus in the communication apparatus group is 4, the quantity of bits of the identification information of the first communication apparatus may be 2.

For another example, if the quantity A of pieces of identification information of the communication apparatuses in the communication apparatus group is 8, the quantity of bits of the identification information of the first communication apparatus may be 3.

Optionally, a quantity of bits of the identification information of the second communication apparatus in the information block may be determined based on a quantity R of pieces of the identification information of the second communication apparatus in the communication apparatus group, for example, log₂R is rounded up, or may be determined based on the quantity A of pieces of identification information of all the communication apparatuses in the communication apparatus group, for example, log₂A is rounded up.

For example, if the quantity of pieces of the identification information of the second communication apparatus in the communication apparatus group is 4, the quantity of bits of the identification information of the second communication apparatus may be 2.

For another example, if the quantity A of pieces of identification information of the communication apparatuses in the communication apparatus group is 8, the quantity of bits of the identification information of the second communication apparatus may be 3.

Optionally, the information block of the communication group further includes other information for communication of the communication group, for example, information such as an MCS, a TBS, and a beam pair. This is not limited.

Based on the first possible design, after receiving the control information, the communication apparatus may decode the control information in any one of the following Manner 1 to Manner 3, to obtain the information block, of the communication group, corresponding to the communication apparatus.

Manner 1: The communication apparatus decodes all information blocks in the control information, and determines, based on the identification information of the communication group in the information block, the information block corresponding to the communication apparatus.

After detecting the control information, the communication apparatus may decode all information blocks in the control information, and determine, based on the identification information of the communication group in the information block, whether the information block is the information block corresponding to the communication apparatus.

Manner 2: The communication apparatus receives indication information from the network device, and determines, based on the indication information, the information block corresponding to the communication apparatus.

The network device may indicate a location of one or more information blocks corresponding to the communication apparatus, and the communication apparatus may decode only the information block indicated by the network device, to determine whether the current communication apparatus participates in communication.

Optionally, the network device indicates, to the communication apparatus by using higher layer signaling or physical layer signaling, a start bit location of one or more information blocks corresponding to the communication apparatus and a quantity of bits of the information block. This is applicable to an application scenario in which different information blocks may correspond to different quantities of bits.

For the first communication apparatus, the first communication apparatus may receive second indication information from the network device. The second indication information may indicate a location of one or more information blocks corresponding to the first communication apparatus in the first control information. For the second communication apparatus, the second communication apparatus may receive fourth indication information from the network device. The fourth indication information may indicate a location of one or more information blocks corresponding to the second communication apparatus in the second control information.

Compared with Manner 1, in Manner 2, only a part of information blocks are decoded, so that decoding complexity of the communication apparatus can be reduced.

Manner 3: The network device may include, in the control information, indication information indicating whether the control information includes the information block corresponding to the communication apparatus, and the communication apparatus may determine, based on the indication information, whether the control information includes the information block corresponding to the communication apparatus, to parse the control information.

As shown in FIG. 29, the network device may include, before the information blocks of the control information, indication information indicating whether the control information includes the information block corresponding to the communication apparatus.

Optionally, the indication information indicating whether the control information includes the information block corresponding to the communication apparatus may be an indication field for the identification information of the communication apparatus. If a bit value corresponding to identification information of a communication apparatus in the indication field is 0, it indicates that the communication apparatus does not participate in communication, that is, the communication apparatus neither sends data nor receives data. If a bit value corresponding to identification information of a communication apparatus in the indication field is 1, it indicates that the communication apparatus participates in communication, that is, the communication apparatus may send data and/or receive data.

Optionally, the indication information indicating whether the control information includes the information block corresponding to the communication apparatus may be indicated in a bitmap (bitmap) manner.

An example in which the communication group includes N communication apparatuses is used. The indication information indicating whether the control information includes the information block corresponding to the communication apparatus may be indicated as N bits. If a bit corresponding to the indication information is 0, it indicates that a communication apparatus corresponding to the bit does not participate in communication. If a bit corresponding to the indication information is 1, it indicates that a communication apparatus corresponding to the bit participates in communication. When detecting that the bit corresponding to the communication apparatus is 1, the communication apparatus may continue to decode a subsequent information block. When detecting that the bit corresponding to the communication apparatus is 0, the communication apparatus may not decode a subsequent information block.

For the first communication apparatus, the first control information sent by the network device to the first communication apparatus may include third indication information, and the third indication information may indicate whether the first control information includes an information block corresponding to the first communication apparatus. For the second communication apparatus, the second control information sent by the network device to the second communication apparatus may include fifth indication information, and the fifth indication information may indicate whether the second control information includes an information block corresponding to the second communication apparatus.

Compared with Manner 1, in Manner 3, when the control information indicates that a communication apparatus does not participate in communication, the communication apparatus may not decode information about a subsequent information block, so that decoding complexity of the communication apparatus can be reduced. Compared with Manner 2, in Manner 3, the communication apparatus scheduled by using each information block may be dynamically determined, to improve scheduling flexibility.

In a second possible design, as shown in FIG. 30, the control information may include identification information of a plurality of communication groups and information blocks of the plurality of communication groups.

The information block of the communication group may include first indication information of the communication group, and a location of the information block of the communication group in the information blocks of the plurality of communication groups is determined based on a location of the identification information of the communication group in the identification information of the plurality of communication groups.

The communication apparatus may determine, based on the identification information of the communication group in the control information, whether a subsequent information block needs to be decoded. If the subsequent information block needs to be decoded, the communication apparatus may determine a location of the information block of the communication group of the communication apparatus in the information blocks of the plurality of communication groups based on the location of the identification information of the communication group in the identification information of the plurality of communication groups.

For example, when the control information includes the identification information of the communication group of the communication apparatus, the communication apparatus determines that the subsequent information block needs to be decoded. When the control information does not include the identification information of the communication group of the communication apparatus, the communication apparatus determines that the subsequent information block does not need to be decoded. When the communication apparatus determines that the subsequent information block needs to be decoded, the communication apparatus may determine the location of the information block of the communication group of the communication apparatus in the information blocks of the plurality of communication groups based on the location of the identification information of the communication group in the identification information of the plurality of communication groups. For example, the identification information of the communication group of the communication apparatus is 2^{nd} identification information of the identification information of the plurality of communication groups in the control information. The communication apparatus may determine that the information block of the communication group of the communication apparatus is a 2^{nd} information block of the control information. Therefore, decoding complexity of the communication apparatus is reduced, decoding is accelerated, and a latency is reduced.

Optionally, a quantity of bits of the identification information of the communication group may be predefined in a communication protocol, or may be notified by the network device to the communication apparatus by using higher layer signaling or physical layer signaling.

For example, the identification information of the communication group includes the identification information of the first communication apparatus and the identification information of the second communication apparatus. A quantity of bits of the identification information of the first communication apparatus and a quantity of bits of the identification information of the second communication apparatus are determined as follows:

Manner 1: The quantity of bits of the identification information of the first communication apparatus and the quantity of bits of the identification information of the second communication apparatus are determined based on a quantity of communication apparatuses included in one group of communication apparatuses. The first half of bits may indicate the identification information of the first communication apparatus, and the second half of bits may indicate the identification information of the second communication apparatus.

Manner 2: The quantity of bits of the identification information of the first communication apparatus and the quantity of bits of the identification information of the second communication apparatus are determined based on a quantity of first communication apparatuses and a quantity of second communication apparatuses included in one group of communication apparatuses. The quantity of bits of the identification information of the first communication apparatus is determined based on the quantity of first communication apparatuses, and the quantity of bits of the identification information of the second communication apparatus is determined based on the quantity of second communication apparatuses.

A quantity of information blocks may be predefined in the communication protocol, or may be notified by the network device to the communication apparatus by using higher layer signaling or physical layer signaling.

A quantity of bits included in the information block may be predefined in the communication protocol, or may be notified by the network device to the communication apparatus by using higher layer signaling or physical layer signaling. For example, the network device may indicate at least one of a start bit and a bit length of the information block.

In a third possible design, as shown in FIG. 31, the control information may include a first list, a second list, and information blocks of a plurality of communication groups.

The first list may include identification information of a first communication apparatus in the communication group, the second list may include identification information of a second communication apparatus in the communication group, and the information block of the communication group may include first indication information of the communication group.

For example, there are n communication groups. The first list may include identification information of n first communication apparatuses, the second list may include identification information of n second communication apparatuses, and the control information may further include information blocks of the n communication groups.

A quantity of bits of the first list and a quantity of bits of the second list may be predefined in a communication protocol, or may be notified by the network device to the communication apparatus by using higher layer signaling or physical layer signaling.

Optionally, the quantity of bits of the first list and the quantity of bits of the second list are determined as follows:
Manner 1: The quantity of bits of the first list and the quantity of bits of the second list are determined based on a quantity of communication apparatuses included in one group of communication apparatuses. The first half of bits indicate the first list, and the second half of bits indicate the second list.
Manner 2: The quantity of bits of the first list and the quantity of bits of the second list are determined based on a quantity of first communication apparatuses and a quantity of second communication apparatuses included in one group of communication apparatuses. The quantity of bits of the first list is determined based on the quantity of first communication apparatuses, and the quantity of bits of the second list is determined based on the quantity of second communication apparatuses.

Optionally, the first list may be a bitmap, and the second list may directly indicate the identification information of the second communication apparatus. The first communication apparatus and the second communication apparatus in the communication group are in a one-to-one correspondence.

The quantity of bits of the second list may be determined based on the first list.

For example, the communication apparatus may determine a quantity of scheduled communication groups based on a quantity of bits with a value of 1 in the first list, to determine the quantity of bits of the second list.

For example, a quantity of communication apparatuses is X. Assuming that there are T 1s in the first list, the quantity of bits of the second list is T*(a value obtained by rounding up log₂X).

For example, if there are four communication apparatuses, the first list may be indicated by using four bits. It is assumed that identification information of the first communication apparatuses may be an identifier 0, an identifier 1, an identifier 2, and an identifier 3 respectively. When the first list is indicated by using 0101, it indicates that a communication apparatus corresponding to the identifier 1 is the first communication apparatus, and a communication apparatus corresponding to the identifier 3 is the first communication apparatus. That is, there are two communication groups for communication currently. It is assumed that identification information of the second communication apparatuses is an identifier 0, an identifier 1, an identifier 2, and an identifier 3 respectively. When the second list is indicated by using 00,10, it indicates that a communication apparatus corresponding to the identifier 0 is the second communication apparatus, and a communication apparatus corresponding to the identifier 2 is the second communication apparatus. To be specific, the control information is used to schedule communication of two communication groups, including: The first communication apparatus corresponding to the identifier 1 sends data to the second communication apparatus corresponding to the identifier 0, and the first communication apparatus corresponding to the identifier 3 sends data to the second communication apparatus corresponding to the identifier 2. The first communication apparatus corresponding to the identifier 1 decodes a 1^{st} information block, the first communication apparatus corresponding to the identifier 3 decodes a 2^{nd} information block, the second communication apparatus corresponding to the identifier 0 decodes the 1^{st} information block, and the second communication apparatus corresponding to the identifier 2 decodes the 2^{nd} information block. Remaining communication apparatuses do not need to decode a subsequent information block.

This possible design is applicable to full duplex. The communication apparatus may serve as both the first communication apparatus and the second communication apparatus, to reduce blind detection complexity of the control information.

In a fourth possible design, the control information may include one or more information blocks, and the information block may include a third list, a fourth list, and first indication information.

The third list may include identification information of one or more first communication apparatuses, the fourth list may include identification information of one or more second communication apparatuses, and the first indication information may indicate a time-frequency resource for communication between the first communication apparatus in the third list and the second communication apparatus in the fourth list.

The possible design may be used in a multi-user (MU) reuse scenario. A plurality of communication groups share a time-frequency resource, and the time-frequency resource may be indicated only once, to reduce signaling overheads. The possible design is applicable to control information transmission in a unicast manner, or is applicable to control information transmission in a multicast manner.

For the unicast manner, the control information may include a third list, a fourth list, and first indication information.

For the multicast manner, the control information may include a plurality of information blocks, and the information block may include a third list, a fourth list, and first indication information:
an information block 1: first indication information 1, a first list 1, and a second list 1;
an information block 2: first indication information 2, a first list 2, and a second list 2;
an information block n: first indication information n, a first list n, and a second list n.

Identification information of 2, 4, 8, 12, and the like communication apparatuses may be indicated in a list, and may be indicated in a bitmap manner. A quantity of bits occupied by the list may be predefined in a communication protocol, or may be notified by the network device to the communication apparatus by using higher layer signaling or physical layer signaling. The first communication apparatus in the third list and the second communication apparatus in the fourth list are in a one-to-one correspondence, and serve as two communication parties to form a communication group.

A quantity of bits of the third list and a quantity of bits of the fourth list may be predefined in the communication protocol, or may be notified by the network device to the communication apparatus by using higher layer signaling or physical layer signaling.

Optionally, the quantity of bits of the third list and the quantity of bits of the fourth list are determined as follows:
Manner 1: The quantity of bits of the third list and the quantity of bits of the fourth list are determined based on a quantity of communication apparatuses included in one group of communication apparatuses. The first half of bits indicate the third list, and the second half of bits indicate the fourth list.
Manner 2: The quantity of bits of the third list and the quantity of bits of the fourth list are determined based on a quantity of first communication apparatuses and a quantity of second communication apparatuses included in one group of communication apparatuses. The quantity of bits of the third list is determined based on the quantity of first communication apparatuses, and the quantity of bits of the fourth list is determined based on the quantity of second communication apparatuses.

Optionally, the third list may be a bitmap, and the fourth list may directly indicate the identification information of the second communication apparatus. The first communication apparatus and the second communication apparatus in the communication group are in a one-to-one correspondence.

The quantity of bits of the fourth list may be determined based on the third list.

For example, the communication apparatus may determine a quantity of scheduled communication groups based on a quantity of bits with a value of 1 in the third list, to determine the quantity of bits of the fourth list.

For example, a quantity of communication apparatuses is X. Assuming that there are T 1s in the third list, the quantity of bits of the fourth list is T*(a value obtained by rounding up log₂X).

For example, if there are four communication apparatuses, the third list may be indicated by using four bits. It is assumed that identification information of the first communication apparatuses may be an identifier 0, an identifier 1, an identifier 2, and an identifier 3 respectively. When the third list is indicated by using 0101, it indicates that a communication apparatus corresponding to the identifier 1 is the first communication apparatus, and a communication apparatus corresponding to the identifier 3 is the first communication apparatus. That is, there are two communication groups for communication currently. It is assumed that identification information of the second communication apparatuses is an identifier 0, an identifier 1, an identifier 2, and an identifier 3 respectively. When the fourth list is indicated by using 00,10, it indicates that a communication apparatus corresponding to the identifier 0 is the second communication apparatus, and a communication apparatus corresponding to the identifier 2 is the second communication apparatus. To be specific, the control information is used to schedule communication of two communication groups, including: The first communication apparatus corresponding to the identifier 1 sends data to the second communication apparatus corresponding to the identifier 0, and the first communication apparatus corresponding to the identifier 3 sends data to the second communication apparatus corresponding to the identifier 2. The first communication apparatus corresponding to the identifier 1 decodes a 1^{st} information block, the first communication apparatus corresponding to the identifier 3 decodes a 2^{nd} information block, the second communication apparatus corresponding to the identifier 0 decodes the 1^{st} information block, and the second communication apparatus corresponding to the identifier 2 decodes the 2^{nd} information block. Remaining communication apparatuses do not need to decode a subsequent information block.

Optionally, the information block may further include information such as a DMRS sequence and an antenna port.

For example, the DMRS sequence and the antenna port may be determined in Manner 1 or Manner 2:
Manner 1: The information block may include a DMRS sequence and an antenna port number.
Manner 2: The DMRS sequence is determined based on an order of the communication apparatuses in the third list and the fourth list, and/or an antenna port number is determined based on an order of the communication apparatuses in the third list and the fourth list.

There is a correspondence between an order of the communication apparatuses in the third list and the fourth list and a DMRS sequence and/or an antenna port number.

For example, communication of a 1^{st} communication group corresponding to a same time-frequency resource may correspond to antenna ports 1000, 1001, and the like. Communication of a 2^{nd} communication group corresponding to the same time-frequency resource corresponds to antenna ports 1002, 1003, and the like. Communication of a 3^{rd} communication group corresponding to the same time-frequency resource corresponds to antenna ports 1004, 1005, and the like.

For another example, as shown in the following Table 2, DMRS sequences and antenna ports may be grouped, for example, a CDM group 0, a CDM group 1, and a CDM group 2 may be included. There is a correspondence between an order of the communication apparatuses in the third list and the fourth list and a DMRS CDM group number.

For example, communication of a 1^{st} communication group corresponding to a same time-frequency resource may correspond to the CDM group 0, and the like. Communication of a 2^{nd} communication group corresponding to the same time-frequency resource corresponds to the CDM group 1, and the like. Communication of a 3^{rd} communication group corresponding to the same time-frequency resource corresponds to the CDM group 2, and the like.

**Table 2**

| ***p*** | **CDM group** (*λ*) |
|---|---|
| 1000 | 0 |
| 1001 | 0 |
| 1002 | 1 |
| 1003 | 1 |
| 1004 | 2 |
| 1005 | 2 |
| 1006 | 0 |
| 1007 | 0 |
| 1008 | 1 |
| 1009 | 1 |
| 1010 | 2 |
| 1011 | 2 |

The solutions provided in embodiments of this application are mainly described above from a perspective of interaction between the devices. It may be understood that, to implement the foregoing functions, each device includes a corresponding hardware structure and/or a corresponding software module for performing each function. A person skilled in the art should easily be aware that, in combination with algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division according to the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

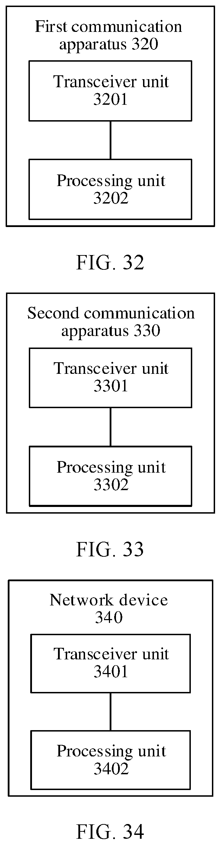

When each functional module is obtained through division based on each corresponding function, FIG. 32 shows a first communication apparatus. The first communication apparatus 320 may include a transceiver unit 3201 and a processing unit 3202. For example, the first communication apparatus 320 may be the first communication apparatus, a chip used in the first communication apparatus, or another combined component, part, or the like that has a function of the first communication apparatus. When the first communication apparatus 320 is the first communication apparatus, the transceiver unit 3201 may be a transceiver, and the transceiver may include an antenna, a radio frequency circuit, and the like. The processing unit 3202 may be a processor (or a processing circuit), for example, a baseband processor, and the baseband processor may include one or more CPUs. When the first communication apparatus 320 is a component having a function of the first communication apparatus, the transceiver unit 3201 may be a radio frequency unit, and the processing unit 3202 may be a processor (or a processing circuit), for example, a baseband processor. When the first communication apparatus 320 is a chip system, the transceiver unit 3201 may be an input/output interface of a chip (for example, a baseband chip), and the processing unit 3202 may be a processor (or a processing circuit) or a logic circuit of the chip system, where the processing unit may include one or more central processing units. It should be understood that in this embodiment of this application, the transceiver unit 3201 may be implemented by a transceiver or a transceiver-related circuit component, and the processing unit 3202 may be implemented by a processor or a processor-related circuit component (or referred to as a processing circuit).

For example, the transceiver unit 3201 may be configured to perform all receiving and sending operations performed by the first communication apparatus in the embodiments shown in FIG. 15 to FIG. 31, and/or configured to support another process of the technology described in this specification. The processing unit 3202 may be configured to perform all operations, except the receiving and sending operations, performed by the first communication apparatus in the embodiments shown in FIG. 15 to FIG. 31, and/or configured to support another process of the technology described in this specification.

The processing unit 3202 is configured to confirm first control information, where the first control information indicates the first communication apparatus to send data, the first control information includes identification information of one or more communication groups and first indication information of the communication group, the communication group includes the first communication apparatus and a second communication apparatus, the identification information of the communication group is used to determine the first communication apparatus and the second communication apparatus, and the first indication information of the communication group indicates a time-frequency resource for communication of the communication group.

The transceiver unit 3201 is configured to receive the first control information from a network device.

The transceiver unit 3201 is further configured to send the data based on the first control information.

In another possible implementation, the transceiver unit 3201 in FIG. 32 may be replaced with a transceiver, and a function of the transceiver unit 3201 may be integrated into the transceiver. The processing unit 3202 may be replaced with a processor, and a function of the processing unit 3202 may be integrated into the processor. Further, the first communication apparatus 320 shown in FIG. 32 may further include a memory. When the transceiver unit 3201 is replaced with the transceiver, and the processing unit 3202 is replaced with the processor, the first communication apparatus 320 in this embodiment of this application may be the communication apparatus shown in FIG. 14.

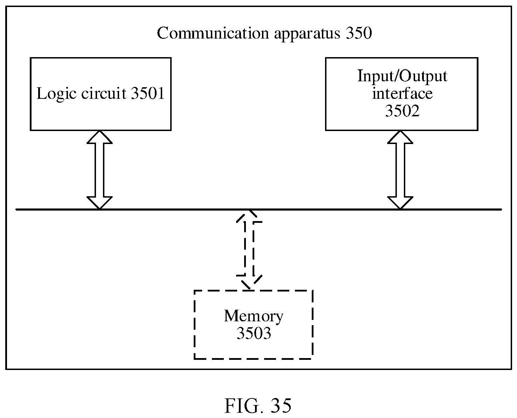

Alternatively, when the transceiver unit 3201 is replaced with the transceiver, and the processing unit 3202 is replaced with the processor, the first communication apparatus 320 in this embodiment of this application may be a communication apparatus 350 shown in FIG. 35. The processor may be a logic circuit 3501, and the transceiver may be an input/output interface 3502. Further, the communication apparatus 350 shown in FIG. 35 may further include a memory 3503.

When each functional module is obtained through division based on each corresponding function, FIG. 33 shows a second communication apparatus. The second communication apparatus 330 may include a transceiver unit 3301 and a processing unit 3302. For example, the second communication apparatus 330 may be the second communication apparatus, a chip used in the second communication apparatus, or another combined component, part, or the like that has a function of the second communication apparatus. When the second communication apparatus 330 is the second communication apparatus, the transceiver unit 3301 may be a transceiver, and the transceiver may include an antenna, a radio frequency circuit, and the like. The processing unit 3302 may be a processor (or a processing circuit), for example, a baseband processor, and the baseband processor may include one or more CPUs. When the second communication apparatus 330 is the component having a function of the second communication apparatus, the transceiver unit 3301 may be a radio frequency unit, and the processing unit 3302 may be a processor (or a processing circuit), for example, a baseband processor. When the second communication apparatus 330 is a chip system, the transceiver unit 3301 may be an input/output interface of a chip (for example, a baseband chip), and the processing unit 3302 may be a processor (or a processing circuit) or a logic circuit of the chip system, where the processing unit may include one or more central processing units. It should be understood that in this embodiment of this application, the transceiver unit 3301 may be implemented by a transceiver or a transceiver-related circuit component, and the processing unit 3302 may be implemented by a processor or a processor-related circuit component (or referred to as a processing circuit).

For example, the transceiver unit 3301 may be configured to perform all receiving and sending operations performed by the second communication apparatus in the embodiments shown in FIG. 15 to FIG. 31, and/or configured to support another process of the technology described in this specification. The processing unit 3302 may be configured to perform all operations, except the receiving and sending operations, performed by the second communication apparatus in the embodiments shown in FIG. 15 to FIG. 31, and/or configured to support another process of the technology described in this specification.

The processing unit 3302 is configured to confirm second control information, where the second control information indicates the second communication apparatus to receive data, the second control information includes identification information of one or more communication groups and first indication information of the communication group, the communication group includes a first communication apparatus and the second communication apparatus, the identification information of the communication group is used to determine the first communication apparatus and the second communication apparatus, and the first indication information of the communication group indicates a time-frequency resource for communication of the communication group.

The transceiver unit 3301 is configured to receive the second control information from a network device.

The transceiver unit 3301 is further configured to receive the data based on the second control information.

In another possible implementation, the transceiver unit 3301 in FIG. 33 may be replaced with a transceiver, and a function of the transceiver unit 3301 may be integrated into the transceiver. The processing unit 3302 may be replaced with a processor, and a function of the processing unit 3302 may be integrated into the processor. Further, the second communication apparatus 330 shown in FIG. 33 may further include a memory. When the transceiver unit 3301 is replaced with the transceiver, and the processing unit 3302 is replaced with the processor, the second communication apparatus 330 in this embodiment of this application may be the communication apparatus shown in FIG. 14.

Alternatively, when the transceiver unit 3301 is replaced with the transceiver, and the processing unit 3302 is replaced with the processor, the second communication apparatus 330 in this embodiment of this application may be a communication apparatus 350 shown in FIG. 35. The processor may be a logic circuit 3501, and the transceiver may be an input/output interface 3502. Further, the communication apparatus 350 shown in FIG. 35 may further include a memory 3503.

When each functional module is obtained through division based on each corresponding function, FIG. 34 shows a network device. The network device 340 may include a transceiver unit 3401 and a processing unit 3402. For example, the network device 340 may be the network device, a chip used in the network device, or another combined component, part, or the like that has a function of the network device. When the network device 340 is the network device, the transceiver unit 3401 may be a transceiver, and the transceiver may include an antenna, a radio frequency circuit, and the like. The processing unit 3402 may be a processor (or a processing circuit), for example, a baseband processor, and the baseband processor may include one or more CPUs. When the network device 340 is the component having a function of the network device, the transceiver unit 3401 may be a radio frequency unit, and the processing unit 3402 may be a processor (or a processing circuit), for example, a baseband processor. When the network device 340 is a chip system, the transceiver unit 3401 may be an input/output interface of a chip (for example, a baseband chip), and the processing unit 3402 may be a processor (or a processing circuit) or a logic circuit of the chip system, where the processing unit may include one or more central processing units. It should be understood that in this embodiment of this application, the transceiver unit 3401 may be implemented by a transceiver or a transceiver-related circuit component, and the processing unit 3402 may be implemented by a processor or a processor-related circuit component (or referred to as a processing circuit).

For example, the transceiver unit 3401 may be configured to perform all receiving and sending operations performed by the network device in the embodiments shown in FIG. 15 to FIG. 31, and/or configured to support another process of the technology described in this specification. The processing unit 3402 may be configured to perform all operations, except the receiving and sending operations, performed by the network device in the embodiments shown in FIG. 15 to FIG. 31, and/or configured to support another process of the technology described in this specification.

The processing unit 3402 is configured to determine first control information, where the first control information indicates a first communication apparatus to send data, the first control information includes identification information of one or more communication groups and first indication information of the communication group, the communication group includes the first communication apparatus and a second communication apparatus, the identification information of the communication group is used to determine the first communication apparatus and the second communication apparatus, and the first indication information of the communication group indicates a time-frequency resource for communication of the communication group.

The processing unit 3402 is further configured to determine second control information, where the second control information indicates the second communication apparatus to receive the data, and the second control information includes the identification information of the one or more communication groups and the first indication information of the communication group.

The transceiver unit 3401 is configured to send the first control information to the first communication apparatus.

The transceiver unit 3401 is further configured to send the second control information to the second communication apparatus.

In another possible implementation, the transceiver unit 3401 in FIG. 34 may be replaced with a transceiver, and a function of the transceiver unit 3401 may be integrated into the transceiver. The processing unit 3402 may be replaced with a processor, and a function of the processing unit 3402 may be integrated into the processor. Further, the network device 340 shown in FIG. 34 may further include a memory. When the transceiver unit 3401 is replaced with the transceiver, and the processing unit 3402 is replaced with the processor, the network device 340 in this embodiment of this application may be the communication apparatus shown in FIG. 14.

Alternatively, when the transceiver unit 3401 is replaced with the transceiver, and the processing unit 3402 is replaced with the processor, the network device 340 in this embodiment of this application may be a communication apparatus 350 shown in FIG. 35. The processor may be a logic circuit 3501, and the transceiver may be an input/output interface 3502. Further, the communication apparatus 350 shown in FIG. 35 may further include a memory 3503.

Embodiments of this application further provide a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the terminal (including a data transmitting end and/or a data receiving end) in any one of the foregoing embodiments, for example, a hard disk drive or a memory of the terminal. Alternatively, the computer-readable storage medium may be an external storage device of the terminal, for example, a plug-in hard disk drive, a smart media card (smart media card, SMC), a secure digital (secure digital, SD) card, a flash card (flash card), or the like that are configured on the terminal. Further, the computer-readable storage medium may alternatively include both of the internal storage unit of the terminal and the external storage device. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, the terms "include", "have", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b c, "a and b", "a and c", "b and c", or "a, b and c", where a, b and c may be singular or plural.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a ROM, a RAM, a magnetic disk, or an optical disc.

## Claims

1. A communication method, comprising:
obtaining, by a first communication apparatus, first control information, wherein the first control information indicates the first communication apparatus to send data, the first control information comprises identification information of one or more communication groups and first indication information of the communication group, the communication group comprises the first communication apparatus and a second communication apparatus, the identification information of the communication group is used to determine the first communication apparatus and the second communication apparatus, and the first indication information of the communication group indicates a time-frequency resource for communication of the communication group; and
sending, by the first communication apparatus, the data based on the first control information.

2. The method according to claim 1, wherein
the first control information further indicates the second communication apparatus to receive data.

3. The method according to claim 1 or 2, wherein
the identification information comprises at least one of the following: a unicast device identifier, a multicast group device identifier, and a broadcast device identifier.

4. The method according to any one of claims 1 to 3, wherein the method further comprises:
obtaining, by the first communication apparatus, first configuration information; and
descrambling, by the first communication apparatus, the first control information based on the first configuration information, wherein
the first configuration information comprises a group radio network temporary identifier RNTI;
the first configuration information comprises a group sending RNTI;
the first configuration information comprises a first sending RNTI; or
the first configuration information comprises a first sending RNTI and a first receiving RNTI.

5. The method according to any one of claims 1 to 4, wherein
the first control information comprises information blocks of the plurality of communication groups, and the information block of the communication group comprises the identification information of the communication group and the first indication information of the communication group.

6. The method according to claim 5, wherein the method further comprises:
obtaining, by the first communication apparatus, second indication information, wherein the second indication information indicates a location of one or more information blocks corresponding to the first communication apparatus in the first control information.

7. The method according to claim 5 or 6, wherein
the first control information further comprises third indication information, and the third indication information indicates whether the first control information comprises the information block corresponding to the first communication apparatus.

8. The method according to any one of claims 1 to 4, wherein
the first control information comprises identification information of the plurality of communication groups and information blocks of the plurality of communication groups; and
the information block of the communication group comprises the first indication information of the communication group, and a location of the information block of the communication group in the information blocks of the plurality of communication groups is determined based on a location of the identification information of the communication group in the identification information of the plurality of communication groups.

9. The method according to any one of claims 1 to 4, wherein
the first control information comprises a first list, a second list, and information blocks of the plurality of communication groups; and
the first list comprises identification information of a first communication apparatus in the communication group, the second list comprises identification information of a second communication apparatus in the communication group, and the information block of the communication group comprises the first indication information of the communication group.

10. The method according to any one of claims 1 to 4, wherein the method further comprises:
the first control information comprises one or more information blocks, and the information block comprises a third list, a fourth list, and first indication information; and
the third list comprises identification information of one or more first communication apparatuses, the fourth list comprises identification information of one or more second communication apparatuses, and the first indication information indicates a time-frequency resource for communication between the first communication apparatus in the third list and the second communication apparatus in the fourth list.

11. A communication method, comprising:
obtaining, by a second communication apparatus, second control information, wherein the second control information indicates the second communication apparatus to receive data, the second control information comprises identification information of one or more communication groups and first indication information of the communication group, the communication group comprises a first communication apparatus and the second communication apparatus, the identification information of the communication group is used to determine the first communication apparatus and the second communication apparatus, and the first indication information of the communication group indicates a time-frequency resource for communication of the communication group; and
receiving, by the second communication apparatus, the data based on the second control information.

12. The method according to claim 11, wherein
the second control information further indicates the first communication apparatus to send data.

13. The method according to claim 11 or 12, wherein
the identification information comprises at least one of the following: a unicast device identifier, a multicast group device identifier, and a broadcast device identifier.

14. The method according to any one of claims 11 to 13, wherein the method further comprises:
obtaining, by the second communication apparatus, second configuration information; and
descrambling, by the second communication apparatus, the second control information based on the second configuration information, wherein
the second configuration information comprises a group radio network temporary identifier RNTI;
the second configuration information comprises a group receiving RNTI;
the second configuration information comprises a second receiving RNTI; or
the second configuration information comprises a second sending RNTI and a second receiving RNTI.

15. The method according to any one of claims 11 to 14, wherein
the second control information comprises information blocks of the plurality of communication groups, and the information block of the communication group comprises the identification information of the communication group and the first indication information of the communication group.

16. The method according to claim 15, wherein the method further comprises:
obtaining, by the second communication apparatus, fourth indication information, wherein the fourth indication information indicates a location of one or more information blocks corresponding to the second communication apparatus in the second control information.

17. The method according to claim 15 or 16, wherein
the second control information further comprises fifth indication information, and the fifth indication information indicates whether the second control information comprises the information block corresponding to the second communication apparatus.

18. The method according to any one of claims 11 to 14, wherein
the second control information comprises identification information of the plurality of communication groups and information blocks of the plurality of communication groups; and
the information block of the communication group comprises the first indication information of the communication group, and a location of the information block of the communication group in the information blocks of the plurality of communication groups is determined based on a location of the identification information of the communication group in the identification information of the plurality of communication groups.

19. The method according to any one of claims 11 to 14, wherein
the second control information comprises a first list, a second list, and information blocks of the plurality of communication groups; and
the first list comprises identification information of a first communication apparatus in the communication group, the second list comprises identification information of a second communication apparatus in the communication group, and the information block of the communication group comprises the first indication information of the communication group.

20. The method according to any one of claims 11 to 14, wherein the method further comprises:
the second control information comprises one or more information blocks, and the information block comprises a third list, a fourth list, and first indication information; and
the third list comprises identification information of one or more first communication apparatuses, the fourth list comprises identification information of one or more second communication apparatuses, and the first indication information indicates a time-frequency resource for communication between the first communication apparatus in the third list and the second communication apparatus in the fourth list.

21. A communication method, comprising:
sending, by a network device, first control information to a first communication apparatus, wherein the first control information indicates the first communication apparatus to send data, the first control information comprises identification information of one or more communication groups and first indication information of the communication group, the communication group comprises the first communication apparatus and a second communication apparatus, the identification information of the communication group is used to determine the first communication apparatus and the second communication apparatus, and the first indication information of the communication group indicates a time-frequency resource for communication of the communication group; and
sending, by the network device, second control information to the second communication apparatus, wherein the second control information indicates the second communication apparatus to receive data, and the second control information comprises the identification information of the one or more communication groups and the first indication information of the communication group.

22. The method according to claim 21, wherein
the first control information is the same as the second control information.

23. The method according to claim 21 or 22, wherein
the identification information comprises at least one of the following: a unicast device identifier, a multicast group device identifier, and a broadcast device identifier.

24. The method according to any one of claims 21 to 23, wherein the method further comprises:
scrambling, by the network device, the first control information based on first configuration information; and/or scrambling, by the network device, the second control information based on second configuration information, wherein
the first configuration information comprises a group radio network temporary identifier RNTI; the first configuration information comprises a group sending RNTI; the first configuration information comprises a first sending RNTI; or the first configuration information comprises a first sending RNTI and a first receiving RNTI; and
the second configuration information comprises a group RNTI; the second configuration information comprises a group receiving RNTI; the second configuration information comprises a second receiving RNTI; or the second configuration information comprises a second sending RNTI and a second receiving RNTI.

25. The method according to claim 24, wherein the method further comprises:
sending, by the network device, the first configuration information to the first communication apparatus; and/or
sending, by the network device, the second configuration information to the second communication apparatus.

26. The method according to any one of claims 21 to 25, wherein the method further comprises:
sending, by the network device, the first control information to the first communication apparatus through a first beam, and sending, by the network device, the second control information to the second communication apparatus through the first beam; or
sending, by the network device, the first control information to the first communication apparatus through a first beam, and sending, by the network device, the second control information to the second communication apparatus through a second beam.

27. The method according to any one of claims 21 to 26, wherein
the first control information comprises information blocks of the plurality of communication groups, and the information block of the communication group comprises the identification information of the communication group and the first indication information of the communication group; and/or
the second control information comprises information blocks of the plurality of communication groups, and the information block of the communication group comprises the identification information of the communication group and the first indication information of the communication group.

28. The method according to claim 27, wherein the method further comprises:
sending, by the network device, second indication information to the first communication apparatus, wherein the second indication information indicates a location of one or more information blocks corresponding to the first communication apparatus in the first control information; and/or
sending, by the network device, fourth indication information to the second communication apparatus, wherein the fourth indication information indicates a location of one or more information blocks corresponding to the second communication apparatus in the second control information.

29. The method according to claim 27 or 28, wherein
the first control information further comprises third indication information, and the third indication information indicates whether the first control information comprises the information block corresponding to the first communication apparatus; and/or
the second control information further comprises fifth indication information, and the fifth indication information indicates whether the second control information comprises the information block corresponding to the second communication apparatus.

30. The method according to any one of claims 21 to 26, wherein
the first control information comprises identification information of the plurality of communication groups and information blocks of the plurality of communication groups; and/or the second control information comprises identification information of the plurality of communication groups and information blocks of the plurality of communication groups; and
the information block of the communication group comprises the first indication information of the communication group, and a location of the information block of the communication group in the information blocks of the plurality of communication groups is determined based on a location of the identification information of the communication group in the identification information of the plurality of communication groups.

31. The method according to any one of claims 21 to 26, wherein
the first control information comprises a first list, a second list, and information blocks of the plurality of communication groups; and/or
the second control information comprises a first list, a second list, and information blocks of the plurality of communication groups; and
the first list comprises identification information of a first communication apparatus in the communication group, the second list comprises identification information of a second communication apparatus in the communication group, and the information block of the communication group comprises the first indication information of the communication group.

32. The method according to any one of claims 21 to 26, wherein the method further comprises:
the first control information comprises one or more information blocks, and the information block comprises a third list, a fourth list, and first indication information; and/or
the second control information comprises one or more information blocks, and the information block comprises a third list, a fourth list, and first indication information; and
the third list comprises identification information of one or more first communication apparatuses, the fourth list comprises identification information of one or more second communication apparatuses, and the first indication information indicates a time-frequency resource for communication between the first communication apparatus in the third list and the second communication apparatus in the fourth list.

33. A first communication apparatus, comprising:
a processing unit, configured to confirm first control information, wherein the first control information indicates the first communication apparatus to send data, the first control information comprises identification information of one or more communication groups and first indication information of the communication group, the communication group comprises the first communication apparatus and a second communication apparatus, the identification information of the communication group is used to determine the first communication apparatus and the second communication apparatus, and the first indication information of the communication group indicates a time-frequency resource for communication of the communication group; and
a transceiver unit, configured to obtain the first control information, wherein
the transceiver unit is further configured to send the data based on the first control information.

34. A second communication apparatus, comprising:
a processing unit, configured to confirm second control information, wherein the second control information indicates the second communication apparatus to receive data, the second control information comprises identification information of one or more communication groups and first indication information of the communication group, the communication group comprises a first communication apparatus and the second communication apparatus, the identification information of the communication group is used to determine the first communication apparatus and the second communication apparatus, and the first indication information of the communication group indicates a time-frequency resource for communication of the communication group; and
a transceiver unit, configured to obtain the second control information, wherein
the transceiver unit is further configured to receive the data based on the second control information.

35. A network device, comprising:
a processing unit, configured to determine first control information, wherein the first control information indicates a first communication apparatus to send data, the first control information comprises identification information of one or more communication groups and first indication information of the communication group, the communication group comprises the first communication apparatus and a second communication apparatus, the identification information of the communication group is used to determine the first communication apparatus and the second communication apparatus, and the first indication information of the communication group indicates a time-frequency resource for communication of the communication group, wherein
the processing unit is further configured to determine second control information, wherein the second control information indicates the second communication apparatus to receive data, and the second control information comprises the identification information of the one or more communication groups and the first indication information of the communication group; and
a transceiver unit, configured to send the first control information to the first communication apparatus, wherein
the transceiver unit is further configured to send the second control information to the second communication apparatus.

36. A communication apparatus, wherein the communication apparatus comprises a processor, and the processor is configured to run a computer program or instructions, so that the communication apparatus performs the communication method according to any one of claims 1 to 10, performs the communication method according to any one of claims 11 to 20, or performs the communication method according to any one of claims 21 to 32.

37. A communication apparatus, wherein the communication apparatus comprises a processor and a memory, the memory is coupled to the processor, the memory is configured to store a computer program or instructions, and the processor is configured to run the computer program or the instructions, to implement the communication method according to any one of claims 1 to 10, implement the communication method according to any one of claims 11 to 20, or implement the communication method according to any one of claims 21 to 32.

38. A communication apparatus, wherein the communication apparatus comprises an input/output interface and a logic circuit, the input/output interface is configured to input and/or output information, and the logic circuit is configured to perform the communication method according to any one of claims 1 to 10, perform the communication method according to any one of claims 11 to 20, or perform the communication method according to any one of claims 21 to 32, and perform processing based on the information and/or generate the information, wherein
the information comprises first control information and/or second control information, the first control information indicates a first communication apparatus to send data, the first control information comprises identification information of one or more communication groups and first indication information of the communication group, the communication group comprises the first communication apparatus and a second communication apparatus, the identification information of the communication group is used to determine the first communication apparatus and the second communication apparatus, the first indication information of the communication group indicates a time-frequency resource for communication of the communication group, the second control information indicates the second communication apparatus to receive data, and the second control information comprises the identification information of the one or more communication groups and the first indication information of the communication group.

39. A computer-readable storage medium, wherein the computer-readable storage medium stores computer instructions or a program, and when the computer instructions or the program is run on a computer, the computer is enabled to perform the communication method according to any one of claims 1 to 10, perform the communication method according to any one of claims 11 to 20, or perform the communication method according to any one of claims 21 to 32.

40. A computer program product, wherein the computer program product comprises computer instruction; and when some or all of the computer instructions are run on a computer, the computer is enabled to perform the communication method according to any one of claims 1 to 10, perform the communication method according to any one of claims 11 to 20, or perform the communication method according to any one of claims 21 to 32.
